# DEMANDE DE BREVET EUROPEEN

(11) **EP 0 592 328 A1**
(43) Date de publication de la demande: **13.04.1994**
(21) Numéro de dépôt: 93402489.4
(22) Date de dépôt: 08.10.1993
(51) Int. Cl.: G02F 1/15

(54) **Matériaux, cellules, dispositifs, procédé de fabrication pour un afficheur électrochimique en couleur**

(30) Priorité: 09.10.1992 FR 9212051
(71) Demandeur: ALPINE POLYVISION INC., New York, N.Y. 10019 (US)
(72) Inventeur: Warszawski, Bernard, FR-75017 Paris (FR)

(57) **Abrégé**

L'invention concerne un matériau destiné à des procédés, des cellules, des dispositifs électrochimiques de modulation de la lumière, par réflexion ou transmission, ledit matériau possédant une conductivité ionique et étant tel que, en combinaison:
1) il est constitué par un mélange homogène, de consistance solide, comportant les constituants suivants:
   (a) un sel hydrosoluble de sels d'au moins un métal cathodiquement déposable à partir d'une solution aqueuse d'un de ses ions simples ou complexes;
   (b) au moins une résine polymère filmogène primitivement hydrosoluble;
   (c) de l'eau;
   (d) un couple redox auxiliaire.
2) il est conformable en couche continue d'une épaisseur comprise entre notamment quelques microns et plusieurs dizaines de microns; selon l'invention, il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

## Description

La présente invention consiste en perfectionnements aux inventions décrites dans le brevet US-A-5 056 899 et demande de brevet PCT/US 910 090.

La présente invention concerne un matériau pour la modulation de la lumière, en particulier pour la réflexion variable de la lumière, la transmission variable de la lumière, l'affichage de signaux et images tels que par exemple des informations alphanumériques, graphiques et autres informations optiques. Elle s'applique notamment aux dispositifs électro-optiques les plus divers, notamment panneaux, écrans et dispositifs d'affichage, fenêtres, vitrines, écrans, pare-brises, lunettes, etc., à transparence variable, valves de lumière, obturateurs, miroirs à réflexion variable, mémoires, etc. L'invention concerne aussi un procédé de fabrication d'un tel matériau.

On connaît de nombreux procédés et dispositifs de modulation de la lumière parmi lesquels présentent un intérêt tout particulier ceux permettant la réalisation de dispositifs électro-optiques de faible épaisseur par rapport à leur surface, notamment, s'agissant de dispositifs d'affichage, d'écrans dits plats. On connaît par exemple les procédés et dispositifs électro-optiques à cristaux liquides, électrochromiques, électrophorétiques, etc.

Parmi ces différentes techniques de modulation de la lumière, les procédés électrochromiques utilisent le changement réversible de couleur et/ou de densité optique obtenu par oxydoréduction électrochimique d'un matériau dit électrochrome dont la forme oxydée et la forme réduite sont de couleurs et/ou de densités optiques différentes.

Les procédés électrochromiques de modulation de la lumière présentent un ensemble de caractéristiques remarquables pour de nombreuses applications: faible tension de commande, au maximum de quelques Volts; faible consommation d'énergie; mémoire en circuit ouvert; intervalle entre électrode et contre-électrode relativement peu critique. Ils présentent en outre des caractéristiques additionnelles particulièrement intéressantes pour des dispositif d'affichage: contraste très élevé, même en vision latérale sous un angle élevé; visibilité excellente par réflexion dans des conditions de forte illumination telle qu'à l'extérieur par fort ensoleillement; échelle de gris étendue; important domaine de températures de fonctionnement, s'étendant souvent à de basses températures. Par ailleurs, la faible tension de commande autorise l'emploi d'électroniques de commande et d'adressage de faible coût. En outre, la faible consommation d'énergie autorise des applications où un fonctionnement autonome (sur piles ou accumulateurs) est requis.

Cependant, les procédés et dispositifs électrochromiques de l'art antérieur présentent un certain nombre d'inconvénients qui en limitent les possibilités et les domaines d'application.

D'une manière générale, une cellule élémentaire d'un dispositif de modulation de la lumière électrochromique de l'art antérieur est une cellule scellée (individuellement ou coopérativement avec d'autres cellules) de façon rigoureusement étanche vis-à-vis de l'ambiance extérieure. Cette cellule comporte généralement une électrode frontale transparente déposée sur une plaque transparente de verre ou de matière plastique, un matériau électrochrome souvent sous forme de couche mince déposée sur l'électrode transparente, un intervalle rempli d'électrolyte, une contre-électrode (également transparente si le dispositif fonctionne par transmission) et des conducteurs de connexion de chaque électrode à l'électronique de commande extérieure à la cellule. Elle comporte aussi le plus souvent un séparateur spécifique destiné à maintenir entre électrode et contre-électrode un intervalle d'épaisseur constante destiné à contenir l'électrolyte. Elle comporte aussi les moyens structurels impliquant les matériaux et joints de scellement destinés à maintenir sa cohésion ainsi que la permanence des contacts physiques et électriques internes nécessaire au bon fonctionnement. Au moins l'électrode frontale et/ou la couche de matériau électrochrome sont délimitées de façon à définir la forme requise pour le point-image ou segment d'image correspondant.

Le scellement rigoureusement étanche est nécessaire pour éviter la perte (par fuite, évaporation, etc..., selon les cas) de constituants du milieu intérieur, notamment de constituants de l'électrolyte, et/ou pour éviter l'entrée dans la cellule de constituants de l'atmosphère extérieure (par exemple oxygène, dioxyde de carbone, humidité, contaminants divers) susceptible, souvent même à l'état de traces, d'altérer ou dégrader des constituants du milieu intérieur, d'introduire des processus parasites, d'affecter le fonctionnement de la cellule et de réduire sa durée de vie. Le problème du scellement est d'autant plus difficile que la cellule doit permettre la traversée étanche des conducteurs qui connectent l'électrode frontale et la contre-électrode à l'électronique extérieure. Les joints de scellement, qui doivent être compatibles avec les différents matériaux impliqués, sont sujets à des contraintes mécaniques résultant notamment des différences entre les coefficients de dilatation de ces matériaux; ce problème s'aggrave lorsque les dimensions du dispositif s'accroissent: aux contraintes d'origine thermique qui peuvent augmenter en raison d'asymétries d'exposition à des sources de chaleur peuvent s'ajouter des contraintes d'origine mécanique dues aux vibrations auxquelles un panneau de grandes dimensions est naturellement exposé et à l'interaction avec la structure de fixation et de maintien du panneau.

La nécessité d'un tel scellement rigoureusement étanche et les problèmes qu'il pose sont explicitement mentionnés et justifiés, et ceci avec les matériaux électrochromes, les électrolytes et les structures les plus divers, dans de nombreux brevets et articles scientifiques relatifs aux dispositifs électrochromiques: US-A-4 127 853; FR-A-2 524 678 (cellule contenant un oxyde métallique comme matériau électrochrome et un électrolyte organique liquide d'où l'oxygène moléculaire doit être chassé); FR-A-2 260 167 (pour plusieurs classes d'électrolytes solides, maintien nécessaire à l'aide d'un boîtier étanche de conditions d'humidité, de pression, de vide ou d'atmosphère gazeuse particulières indispensables au bon fonctionnement du dispositif); US-A-4 128 315 (scellement nécessaire pour éviter une perte d'humidité); US-A-4 116 546 (utilisation d'un électrolyte solide en vue notamment d'éviter la dégradation rapide du scellement observée avec des électrolytes liquides ou semi-solides acides); US-A-4 167 309 (protection contre l'oxygène atmosphérique de matériaux électrochromes radicalaires); US-A-3 704 057 (joint d'étanchéité pour sceller une cellule comprenant du trioxyde de tungstène comme matériau électrochrome et un électrolyte gélifié semi-solide); US-A-3 708 220 (cellule évitant toute fuite par auto-scellement de l'orifice d'entrée de l'électrolyte); J. Duchene et alias, IEEE Transactions on Electron Devices, Vol. RD-26, n° 8, Août 1986, p. 1263 (cellule à électrodéposition avec électrolyte organique liquide étanchéifiée par un verre de scellement), etc.

Dans les procédés et dispositifs électrochromiques de l'art antérieur, il existe plusieurs types de matériaux électrochromes et de mécanismes de production et d'effacement de la densité optique et/ou de la coloration, chacun présentant des problèmes propres qui s'ajoutent aux problèmes communs décrits précédemment.

### 1. Oxydoréduction de solides électrochromes non-stoechiométriques:

Un nombre considérable de solides dits électrochromes ont été utilisés: ce sont généralement des solides insolubles dans les deux états d'oxydation entre lesquels ils changent de couleur; ces solides sont électriquement isolants ou faiblement conducteurs. On peut citer, entre autres parmi les matériaux inorganiques: WO₃, MoO₃, V₂O₅, Nb₂O₅, Iroₓ, etc. (une liste extensive en est donnée par exemple dans US-A-3 704 057) et, parmi les matériaux organiques: diphtalocyanine de Lu, de Yb, etc.

Ces solides électrochromes doivent généralement être mis en oeuvre par dépôt en couche mince sur l'électrode transparente à l'aide des techniques coûteuses de dépôt sous vide (évaporation sous vide, pulvérisation cathodique, etc.). Leur changement de couleur est généralement de l'incolore ou d'une couleur à une autre couleur: incolore à bleu pour WO₃ et MoO₃, jaune à vert pour V₂O₅, incolore à bleu ou bleu-noir pour IrOₓ, vert à rouge pour la diphtalocyanine de lutécium, etc.

Le plus utilisé de ces solides électrochromes, le trioxyde de tungstène WO₃, présente, en plus de ceux déjà mentionnés, d'autres problèmes représentatifs de ceux de cette classe de matériaux électrochromes: très haute sensibilité aux contaminants, notamment atmosphériques (FR-A-2 524 678), dégradation par corrosion avec dissolution dans les électrolytes aqueux et polymères (US-A-4 215 917, US-A-3 970 365), réduite mais non supprimée dans les électrolytes organiques (Kodintsev et alias, Elecktrokhimiya 1983, Vol. 19, n° 8, 1137). Des techniques complexes, par exemple l'évaporation oblique (US-A-4 390 246), sont requises pour améliorer les caractéristiques de coloration et d'effacement qui sont très sensibles à de légères modifications de préparation et de composition. Dans la plupart des dispositifs d'affichage (par exemple US-A-4 128 315), le film de trioxyde de tungstène doit être déposé avec délimitation selon la forme et les dimensions du point ou segment d'image. Enfin, les cellules ne possèdent ni le seuil de tension ni la mémoire en circuit couplé sur d'autres cellules qui seraient nécessaires au fonctionnement matriciel multiplexé (Yoshiro Mori, J.E.E., Août 1985, p. 53).

### 2) Oxydo-réduction de composés radicalaires:

Le plus représentatif et le plus étudié des matériaux de cette classe est l'heptyl-viologène. Celui-ci, dissous dans l'électrolyte où il est incolore, se dépose par réduction en un film coloré en bleu ou rouge sur l'électrode transparente et se redissout par oxydation (US-A-4 116 535). Mais il est connu que le dépôt recristallise progressivement sous une forme qui ne peut être redissoute, ce qui limite sévèrement le nombre de cycles accessibles et la durée de vie, ou, alternativement, que l'électrode se passive, réduisant notablement la vitesse de la réaction d'écriture qu'il faut alors catalyser, par exemple à l'aide d'ions métalliques déposables (EP-A-0083668). Enfin, les cellules ne présentent pas de seuil ni de mémoire en circuit couplé d'autres cellules.

### 3) Electrodéposition de métaux:

L'électrodéposition réversible de métaux à partir d'une solution électrolytique a fait l'objet de divers travaux, notamment avec des électrolytes organiques liquides en raison des problèmes de corrosion et des réactions parasites nocives à la stabilité et à la durée de vie rencontrés avec les électrolytes aqueux. Par exemple, Y. Duchene et al. (article cité) décrivent une cellule d'affichage utilisant comme électrolyte du méthanol ou de l'acétonitrile contenant de l'iodure d'argent et de l'iodure de sodium. Les ions argent se réduisent en un film d'argent présentant un contraste élevé. Toutefois, la densité optique dépend, pour une même charge électrique, de la densité de courant utilisée, et des hétérogénéités apparaissent sur le film déposé après un certain nombre de cycles dépôt-redissolution. La cellule ne possède pas de seuil de tension d'écriture et ne se prête donc pas à l'écriture matricielle multiplexée. La zone de l'électrode transparente correspondant à l'affichage doit être délimitée à l'intérieur de la cellule à l'aide d'une couche isolante gravée selon le dessin de la zone en question. Enfin, l'utilisation d'une technologie de verre de scellement est indiquée comme l'une des conditions de la fiabilité, confirmant l'importance du scellement rigoureusement étanche.

Une cellule voisine décrite par I. Camlibel et al. (Appl. Phys. Letters, 33,9, Nov. 78, p. 793) contient de l'iodure d'argent et de l'iodure de potassium dans du diméthylsulfoxyde et produit un dépôt doré spéculaire ou rouge vif selon les conditions.

### 4) Polymère redox.

Des travaux récents portent sur des polymères tels que la polyaniline, le polyacétylène, le polypyrrole, le polythiophène, etc., qui, en couche mince sur une électrode transparente, peuvent changer de couleur (par exemple du rouge au bleu pour le polythiophène) selon leur état d'oxydation. Ces matériaux, généralement assez instables, ou facilement altérables, présentent une faible durée de vie et ne permettent d'atteindre qu'un très petit nombre de cycles.

On a vu que la plupart des cellules électro-chromiques de l'art antérieur ne présentent pas de seuil de tension défini, c'est-à-dire une tension en dessous de laquelle un point-image ne s'écrit pas. En outre, si la plupart de ces cellules offrent une mémoire en circuit ouvert, c'est-à-dire une persistance de l'état écrit quand la source de tension d'écriture est déconnectée, cette mémoire se décharge partiellement si on connecte une cellule écrite à une cellule effacée, de sorte que la première s'efface partiellement tandis que la seconde s'écrit partiellement et la densité optique des deux tend à s'uniformiser. L'absence d'un seuil défini d'écriture et/ou d'une mémoire persistante en circuit couplé sur une autre cellule effacée interdisent l'écriture matricielle d'un réseau de points-image placés aux intersections de deux réseaux orthogonaux de conducteurs parallèles entre eux: on constate, et l'analyse confirme, que les points-image non sélectionnés s'écrivent partiellement tandis que les points-image sélectionnés s'effacent partiellement; la densité optique des points-image sélectionnés et celle des points-image non sélectionnés se rapprochent, dégradant et même supprimant tout contraste.

On a vu que dans l'art antérieur, il est exceptionnel d'obtenir un noir véritable dans l'état écrit (et pas toujours courant d'obtenir un aspect véritablement blanc ou transparent incolore dans l'état effacé). Généralement on obtient des couleurs telles que le bleu, le bleu-noir, le pourpre, etc. En dehors de la préférence esthétique pour une couleur ou pour le noir, la production d'une couleur particulière interdit l'affichage multi-couleur par trichromie (sauf s'il devenait possible de générer les trois couleurs fondamentales). En revanche, la production d'un noir véritable dans l'état écrit et d'un blanc véritable (ou d'un aspect transparent incolore en transmission) dans l'état effacé permet l'affichage multi-couleur par synthèse additive en associant des points-image à des écrans colorés bleus, verts et rouges selon une distribution répétitive.

De nombreux dispositifs électrochromiques de l'art antérieur utilisent un électrolyte liquide (par exemple un électrolyte aqueux tel qu'une solution aqueuse d'acide sulfurique (FR-A-2 323 202), ou un électrolyte organique tel qu'une solution de perchlorate de lithium dans du carbonate de propylène (Yoshiro Mori, art. cité). Cet électrolyte, qui ne peut généralement pas être commun à plusieurs cellules pour des raisons électriques, exige un confinement individuel dans chaque cellule qui doit être suffisamment rigide pour comprendre un compartiment électrolytique indéformable. En plus des problèmes posés par le remplissage et le scellement individuels de chaque cellule, la structure particulièrement complexe à laquelle on arrive, outre son coût, ne permet pas d'envisager un dispositif d'affichage à haute résolution, tel que par exemple un écran d'ordinateur: s'il paraît possible de réduire la taille du point-image aux valeurs nécessaires, de l'ordre de quelques centaines de microns, l'encombrement de la cellule et notamment l'existence nécessaire de parois latérales ne permet pas d'envisager de réduire l'intervalle entre points-image adjacents à une valeur qui devrait être de l'ordre de quelques dizaines de microns au plus.

En vue de réduire la complexité de la cellule d'affichage entraînée par les problèmes de confinement d'un électrolyte liquide, on a utilisé des électrolytes liquides gélifiés semi-solides (US-A-3 708 220: acide sulfurique gélifié), des polymères avec fonctions acides (US-A-4 116 545), des membranes échangeuses d'ions (US-A-4 128 315), etc. La structure des cellules est effectivement simplifiée et dans certains cas bénéficie au surplus de propriétés de collant de contact qui simplifient la construction et de propriétés viscoélastiques qui améliorent les contacts. Mais tous ces électrolytes, utilisés en association avec une couche de solide électrochrome déposée sur l'électrode transparente, contiennent d'une manière ou d'une autre une certaine quantité d'eau (de constitution, d'hydratation, d'imprégnation, etc.), et les cellules présentent à des degrés divers les problèmes de corrosion mentionnés plus haut, ainsi que la nécessité d'un scellement rigoureusement étanche.

Toujours en vue d'éviter d'utiliser un électrolyte liquide libre, on a utilisé des solides inorganiques présentant une conductivité ionique, tels que par exemple l'alumine bêta (M. Green et al., Solid State Ionics 3/4, 1981, p. 141-147, North-Holland), ou encore des polymères à conduction ioniques, tels que par exemple des solutions solides de perchlorate de lithium dans du polyoxyde d'éthylène (FR-A-2 542 322). Cependant il est bien connu que de tels électrolytes solides ne présentent aux températures ambiantes ou ordinaires qu'une conductivité ionique généralement très faible, pénalisant considérablement la vitesse de l'écriture et de l'effacement qui peuvent nécessiter plusieurs secondes ou même bien davantage. En outre, on observe souvent une dégradation progressive du contact électrique entre les électrolytes solides inorganiques et les électrodes, pénalisant la durée de vie.

Dans les dispositifs électrochromiques de l'art antérieur, la contre-électrode est souvent de structure et de fabrication complexes et coûteuses, en raison des fonctions qu'elle peut avoir à assurer simultanément: fonction redox auxiliaire, maintien d'un potentiel d'électrode constant et même déterminé, capacité de charge élevée, réversibilité, etc., tout en étant capable d'un nombre de cycles élevé sans dégradation. Par exemple, il a été réalisé une contre-électrode comportant une deuxième couche d'un solide électrochrome modifié de façon à présenter une faible électrochromicité et déposé sur une électrode transparente (US-A-4 278 329). Une autre contre-électrode est une feuille d'un papier formé à l'aide de fibres acryliques, d'un liant et de poudre de carbone, auquel se trouve également incorporé un solide électrochrome (US-A-4 088 395). Une autre contre-électrode dont le potentiel d'électrode est ajustable comprend de la poudre de carbone, un liant et des mélanges des dépolarisants W₁₈O₄₉ et V₆O₁₃ dans des proportions ajustables.

La structure d'un écran d'affichage électrochromique de l'art antérieur et sa fabrication sont généralement complexes et coûteuses, spécialement quand la taille du panneau s'accroît. Au-delà d'une certaine taille, les problèmes techniques et les coûts de fabrication deviennent tels que de grands panneaux d'affichage peuvent être réalisés seulement sous forme d'une mosaïque de petits panneaux indépendants.

La présente invention consiste en perfectionnements aux inventions décrites dans le brevet US-A-5 056 899 et demande de brevet PCT/US 910 090.

Dans le brevet US-A-5 056 899, on a décrit un matériau, dit matériau électrolytique, de consistance solide et de texture continue, se prêtant à la formation de couches continues de faible épaisseur, transparent, susceptible d'être opacifié par exemple à l'aide d'un pigment contrastant, possédant à la fois des propriétés d'électrochromisme, de conduction ionique, de comportement redox auxiliaire et de déformabilité plastique ou viscoélastique et pouvant posséder en outre des propriétés d'adhésion par contact, susceptible d'être mis en oeuvre directement ou par l'intermédiaire d'une composition formatrice fluide.

Plus précisément, le susdit matériau est un matériau continu c'est-à-dire non granulaire, transparent, contrastable et opacifiable dans sa masse, de consistance solide, possédant une déformabilité plastique ou viscoélastique, susceptible de surcroît de posséder une conductivité permanente même s'il est exposé à l'atmosphère, et encore de présenter un collant de contact, lequel matériau, conformé en couche ou pellicule mince, préférentiellement de quelques microns à quelques dizaines de microns d'épaisseur, et placé au contact d'une première électrode ou électrode de travail, transparente, par une face et d'une seconde électrode ou contre-électrode par la face opposée, constitue et comprend à la fois le matériau électrochrome, l'électrolyte et un couple redox auxiliaire de la cellule d'affichage ainsi constituée. En tant que matériau électrochrome, il est susceptible de subir au contact de l'électrode transparente un changement réversible de degré d'oxydation accompagné d'un changement réversible de coloration et/ou de densité optique: par réduction cathodique, il se forme à l'interface un métal ou alliage métallique apparaissant comme une coloration ou noircissement et/ou une opacification et constituant un point-image ou segment d'image présentant un ensemble remarquable de caractéristiques; par oxydation anodique, le métal ou alliage se redissout en ions métalliques, reconstituant l'aspect initial du milieu. En tant qu'électrolyte, il possède une conductivité ionique élevée due à sa nature de solution aqueuse très concentrée, conductivité qu'il conserve en permanence dans un mode préféré de réalisation. En tant que couple redox auxiliaire, il permet que s'effectue réversiblement à la contre-électrode une réaction électrochimique conjuguée de celle qui se produit au même moment à l'électrode de travail.

Le susdit matériau est destiné à être mis en oeuvre dans un procédé de modulation de la lumière par réflexion et/ou par transmission, en particulier un procédé et des dispositifs d'affichage, permettant réversiblement et répétitivement, à l'aide d'une tension de l'ordre du Volt appliquée entre deux électrodes dont l'une au moins est transparente (et la seconde également en cas de fonctionnement en transmission) et dans l'intervalle desquelles se trouve placé le susdit matériau, d'augmenter uniformément par passage du courant dans un sens la densité optique dans la zone d'aire commune aux deux électrodes et au matériau selon une échelle continue de gris jusqu'à un noir d'encre d'imprimerie ou jusqu'à l'opacité, puis de réduire ou effacer la densité optique précédemment créée, procédé présentant d'autres caractéristiques remarquables utilisables isolément ou en combinaison: existence d'un seuil de tension d'écriture, persistance (mémoire) de la densité optique créée, contraste élevé y compris en vision latérale, résolution élevée, etc.

Le susdit matériau est conjointement destiné à un dispositif de modulation de la lumière électrochromique de faible épaisseur pouvant fonctionner par réflexion et/ou par transmission, en particulier un dispositif d'affichage, qui ne comporte que des matériaux solides, ne nécessite pas d'espaceur spécifique pour maintenir un écartement convenable entre électrode de travail et contre-électrode de chaque cellule élémentaire, ni d'intervalle précis entre électrode de travail et contre-électrode ni structure de maintien bien qu'assurant un contact continu approprié entre le matériau et chaque électrode, ni de scellement rigoureusement étanche, et qui se prête en particulier à des constructions de très grande surface.

Dans le brevet US-A-5 056 899, le matériau décrit, destiné plus spécialement à un procédé, respectivement à une cellule, électrochromique de modulation de la lumière, par réflexion ou transmission, est caractérisé en ce que, en combinaison, il est constitué au moins par un mélange homogène, de consistance solide, d'au moins:
a) un sel hydrosoluble ou un mélange hydrosoluble de sels d'au moins un métal qui peut être réversiblement déposé cathodiquement et oxydé anodiquement à partir d'une solution aqueuse d'un de ses ions simples ou complexes;
b) au moins une résine polymère filmogène primitivement hydrosoluble; et
c) de l'eau.

Le matériau possédant une électroconductivité ionique, et en outre comprenant un couple redox auxiliaire réversible et ayant ses constituants et compositions pris dans le groupe permettant d'obtenir une déformabilité plastique ou viscoélastique.

Le matériau étant capable, réversiblement:
a) de développer par réduction cathodique d'au moins un ion métallique électrodéposable présent dans le matériau un dépôt de métal ou d'alliage métallique;
b) de dissoudre par oxydation anodique le dépôt de métal ou d'alliage métallique et de réincorporer dans leur état originel l'ion ou les ions métalliques produits par cette oxydation;
c) de développer par oxydation anodique la forme oxydée du coupe redox auxiliaire;
d) de développer par réduction cathodique la forme réduite du couple redox auxiliaire;

et pouvant comprendre en outre, de manière non limitative:
a) des cations métalliques non électro-déposables en solution aqueuse;
b) un ou plusieurs pigments contrastants et/ou masquants sous forme particulière dispersée;
c) un ou plusieurs agents colorants;
d) un ou plusieurs couples redox additionnels;
e) un ou plusieurs acides;
f) un ou plusieurs agents de réticulation;
g) un ou plusieurs agents complexants;
h) tous additifs dissous ou dispersés susceptibles d'améliorer les propriétés et l'utilisation du matériau;
i) des agents de formation et/ou d'application en couche ou pellicule du matériau.

Enfin, dans la demande de brevet français FR-A-2 669 121, il est proposé des perfectionnements au matériau pour la modulation de la lumière décrit ci-dessus.

Plus précisément, il est proposé:
- un matériau amélioré susceptible de permettre le fonctionnement des dispositifs de modulation de la lumière qui l'utilisent dans un plus grand domaine de températures ambiantes, un domaine notamment étendu vers les basses et très basses températures, ainsi que dans un plus grand domaine d'humidités relatives atmosphériques, un domaine notamment étendu vers les très faibles humidités atmosphériques;
- un matériau amélioré conférant aux cellules et dispositifs de modulation de la lumière qui l'utilisent un plus grand éventail de caractéristiques, notamment des caractéristiques électro-optiques et de durée de vie améliorées et/ou nouvelles;
- une composition particulière de matériau amélioré conférant aux cellules et dispositifs de modulation de la lumière qui l'utilisent, notamment une tonalité plus profonde du noir généré et un contraste résultant accru, un rendement optique, c'est-à-dire le rapport de la densité optique à la charge électrique génératrice, augmenté en réflexion et en transmission, des vitesses élevées d'écriture et d'effacement, une réversibilité améliorée entraînant une extension de la durée de vie en cyclage, un seuil net de tension d'écriture facilitant l'adressabilité matricielle.

A cet effet, la demande de brevet américain PCT/US 910 090 concerne un matériau amélioré, destiné plus spécialement à des procédés, cellules et dispositifs électrochromiques de modulation de la lumière, par réflexion ou transmission, constitué au moins par un mélange homogène d'au moins:
a) un sel ou un mélange de sels d'au moins un métal qui peut être réversiblement déposé cathodiquement et oxydé anodiquement à partir d'une solution aqueuse d'un de ses ions simples ou complexes;
b) un sel ou un mélange de sels d'au moins un métal ou cation non électrodéposable à partir d'une solution aqueuse;
c) au moins une résine polymère filmogène primitivement hydrosoluble; et
d) de l'eau;

ledit matériau possédant une électroconductivité ionique, et en outre comprenant un couple redox auxiliaire réversible;
ledit matériau étant capable, réversiblement:
a) de développer par réduction cathodique d'au moins un ion métallique électrodéposable présent dans le matériau, un dépôt de métal ou d'alliage métallique;
b) de dissoudre par oxydation anodique le dépôt de métal ou d'alliage métallique et de réincorporer dans leur état originel l'ion ou les ions métalliques produits par cette oxydation;
c) de développer par oxydation anodique la forme oxydée du couple redox auxiliaire;
d) de développer par réduction cathodique la forme réduite du couple redox auxiliaire;

caractérisé en ce que les proportions des sels sont sélectionnées pour que la proportion pondérale du sel ou mélange de sels d'au moins un métal ou cation non électrodéposable soit au moins égale à celle du sel ou mélange de sels d'au moins un métal qui peut être réversiblement déposé cathodiquement et oxydé anodiquement à partir d'une solution aqueuse d'un de ses ions simples ou complexes; et le mélange de sels est hydrosoluble.

Par contre, les documents PCT/US 910 090 et US-5 056 899 ne s'intéressent pas, ne suggèrent pas et ne décrivent pas un matériau pour un afficheur électrochimique en couleur.

La présente invention concerne des matériaux, cellules, dispositifs, procédé de fabrication pour un afficheur électrochimique en couleur.

Un premier objet de la présente invention est un matériau susceptible de permettre aux cellules et dispositifs de modulation de la lumière qui l'utilisent de présenter une coloration.

Un second objet de la présente invention est un matériau conférant aux cellules et dispositifs de modulation de la lumière qui l'utilisent un plus grand éventail de caractéristiques, notamment des caractéristiques électro-optiques et de durée de vie améliorées et/ou nouvelles.

Un autre objet de la présente invention est d'atteindre les effets, avantages, résultats, performances, possibilités qui précèdent de manière combinée, sans perdre le bénéfice des acquis souhaités obtenus avec les matériaux tels que définis par le brevet US-5 056 899 et la demande de brevet PCT/US 910 090.

A cet effet, l'invention propose un matériau destiné à des procédés, des cellules, des dispositifs électrochimiques de modulation de la lumière, par réflexion ou transmission, ledit matériau possédant une conductivité ionique et étant tel que, en combinaison:
1. Il est constitué par un mélange homogène, de consistance solide, comportant les constituants suivants:
   (a) un sel hydrosoluble de sels d'au moins un métal cathodiquement déposable à partir d'une solution aqueuse d'un de ses ions simples ou complexes;
   (b) au moins une résine polymère filmogène primitivement hydrosoluble;
   (c) de l'eau;
   (d) un couple redox auxiliaire.
2. Il est conformable en couche continue d'une épaisseur comprise entre notamment quelques microns et plusieurs dizaines de microns.

Le matériau étant capable de, réversiblement (1) développer des dépôts de métal ou d'alliage par réduction cathodique d'au moins un ion métallique déposable présent dans le matériau, et (2) effacer, par oxydation anodique, les dépôts et réincorporer dans l'état d'origine l'ion ou les ions métalliques produits par cette oxydation,
caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

L'invention propose également un matériau destiné à des procédés, cellules et dispositifs, électrochimiques de modulation de la lumière, par réflexion ou transmission, constitué au moins par un mélange homogène, d'au moins:
(a) un sel ou un mélange de sels d'au moins un métal qui peut être réversiblement déposé cathodiquement et oxydé anodiquement à partir d'une solution aqueuse d'un de ses ions simples ou complexes;
(b) un sel ou un mélange de sels d'au moins un métal ou cation non électrodéposable à partir d'une solution aqueuse;
(c) au moins une résine polymère filmogène primitivement hydrosoluble; et
(d) de l'eau,

ledit matériau possédant une électroconductivité ionique, et en outre comprenant un couple redox auxiliaire réversible;
ledit matériau étant capable, réversiblement:
(a) de développer par réduction cathodique d'au moins un ion métallique électrodéposable présent dans le matériau un dépôt de métal ou d'alliage métallique;
(b) de dissoudre par oxydation anodique le dépôt de métal ou d'alliage métallique et de réincorporer dans leur état originel l'ion ou les ions métalliques produits par cette oxydation;
(c) de développer par oxydation anodique la forme oxydée du couple redox auxiliaire;
(d) de développer par réduction cathodique la forme réduite du couple redox auxiliaire,

les proportions de sels étant sélectionnées pour que la proportion pondérale du sel ou mélange de sels d'au moins un métal ou cation non électrodéposable soit au moins égale à celle du sel ou mélange de sels d'au moins un métal qui peut être réversiblement déposé cathodiquement et oxydé anodiquement à partir d'une solution aqueuse d'un de ses ions simples ou complexes; et le mélange de sels étant hydrosoluble,
caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

Selon d'autres caractéristiques qui résultent de ce qui suit, ces matériaux présentent également les caractéristiques suivantes, optionnellement seules ou en combinaison: ils comportent au moins deux pigments interférentiels différents, mélangés et/ou juxtaposés l'un au-dessus de l'autre et/ou l'un à côté de l'autre correspondants à une ou plusieurs couleurs voulues; ils comprennent en outre un noir sous forme particulaire, notamment de carbone ou équivalent, ils comprennent en outre au moins un pigment non interférentiel et/ou un colorant; les constituants et les compositions sont choisis dans le groupe permettant d'obtenir une consistance solide et une déformabilité plastique ou viscoélastique; les constituants et la composition sont sélectionnés dans le sous-groupe permettant d'obtenir des propriétés adhésives, notamment un toucher collant ou collant de contact.

L'invention propose encore un procédé de fabrication d'un matériau selon l'invention, caractérisé en ce qu'il comporte au moins les étapes consistant à:
1. Constituer d'abord au moins une composition formatrice fluide comportant au moins les constituants du matériau et de l'eau en quantité telle que cette composition formatrice fluide ait une viscosité appropriée, notamment pour son application en couche.
2. Agir sur cette composition formatrice fluide en vue de donner au matériau sa consistance solide par évaporation, traitement thermique, réticulation, vulcanisation.

Selon l'invention, ce procédé comporte au moins l'étape consistant à constituer au moins une composition formatrice fluide comportant au moins les constituants du matériau et de l'eau en quantité telle que cette composition formatrice fluide ait une viscosité appropriée à son utilisation sous forme fluide.

Selon l'invention, ce procédé comporte au moins l'étape consistant à disperser le ou les pigments interférentiels dans la composition formatrice fluide constituée.

L'invention propose encore une cellule de modulation de la lumière, caractérisée par le fait qu'elle comporte, au moins, en combinaison:
1. Une première électrode (électrode de travail), transparente ou substantiellement transparente et électroniquement conductrice.
2. Une seconde électrode (contre-électrode), écartée transversalement de l'électrode de travail et électroniquement conductrice.
3. Au moins une couche (ou portion de couche) de matériau selon l'invention interposée entre les deux électrodes et en contact avec elles dans la région d'un point-image ou d'un segment d'image.
4. Des zones d'amenée du courant électrique sur l'électrode de travail et sur la contre-électrode, aptes notamment à permettre d'une part d'appliquer à l'électrode de travail une tension électrique négative par rapport à celle de la contre-électrode et, d'autre part, de faire passer entre les électrodes un courant dont le sens est opposé à celui du courant électrique résultant de l'application de la tension précédente.

Cette cellule permettant l'écriture d'au moins un point-image ou segment d'image, le maintien dans l'état écrit d'un tel point-image ou segment d'image, réversiblement, l'effacement d'un tel point-image ou segment d'image, et le maintien dans l'état effacé de ce point-image ou segment d'image, l'écriture d'un point-image ou segment d'image étant défini comme l'accroissement de coloration ou de densité optique dans la région de l'interface entre l'électrode de travail et la couche ou portion de couche de matériau et l'effacement d'un point-image ou segment d'image étant défini comme la diminution ou la disparition de l'accroissement de coloration ou de densité optique obtenu lors de l'écriture.

L'invention propose encore une cellule de modulation de la lumière, caractérisée en ce qu'elle comporte, au moins, en combinaison:
1. Une première électrode (électrode de travail), transparente ou substantiellement transparente et électroniquement conductrice.
2. Une seconde électrode (contre-électrode), écartée transversalement de l'électrode de travail et électroniquement conductrice.
3. Au moins une couche (ou portion de couche) de matériau selon l'invention au contact de la seconde électrode (contre-électrode).
4. Au moins une couche de matériau, au contact de la première électrode (électrode de travail), comportant, au moins, en combinaison:
   (a) un sel hydrosoluble de sels d'au moins un métal cathodiquement déposable à partir d'une solution aqueuse d'un de ses ions simples ou complexes;
   (b) au moins une résine polymère filmogène primitivement hydrosoluble;
   (c) de l'eau;
   (d) un couple redox auxiliaire.
5. Des zones d'amenée du courant électrique sur l'électrode de travail et sur la contre-électrode, aptes notamment à permettre d'une part d'appliquer à l'électrode de travail une tension électrique négative par rapport à celle de la contre-électrode et, d'autre part, de faire passer entre les électrodes un courant dont le sens est opposé à celui du courant électrique résultant de l'application de la tension précédente.

Cette cellule permettant l'écriture d'au moins un point-image ou segment d'image, le maintien dans l'état écrit d'un tel point-image ou segment d'image, réversiblement, l'effacement d'un tel point-image ou segment d'image, et le maintien dans l'état effacé de ce point-image ou segment d'image, l'écriture d'un point-image ou segment d'image étant défini comme l'accroissement de coloration ou de densité optique dans la région de l'interface entre l'électrode de travail et la couche ou portion de couche de matériau et l'effacement du point-image ou segment d'image étant défini comme la diminution ou la disparition de l'accroissement de coloration ou de densité optique obtenu lors de l'écriture.

Selon l'invention, ces cellules comportent au moins une couche de matériau comportant au moins deux pigments interférentiels différents, mélangés et/ou juxtaposés l'un au-dessus de l'autre et/ou l'un à côté de l'autre, correspondants à une ou plusieurs couleurs voulues.

L'invention propose encore un dispositif élémentaire de modulation de la lumière, caractérisé par le fait qu'il comporte au moins en combinaison:
A) Une cellule de modulation de la lumière selon l'invention.
B) Des amenées de courant électrique au contact des zones d'amenée du courant électrique.
C) Des connexions électriques prolongeant les amenées de courant; et
D) Au moins un substrat mécanique, porteur du dispositif.

L'invention propose encore un dispositif autonome de modulation de la lumière, caractérisé en ce qu'il comporte, au moins en combinaison:
1. Au moins un et généralement une pluralité de dispositifs élémentaires selon l'invention.
2. La prolongation jusqu'à un ou plusieurs connecteurs ou une ou plusieurs zones de connexions électriques des dispositifs élémentaires; et
3. Des moyens mécaniques porteurs conférant au dispositif une rigidité structurelle.

Selon l'invention, dans le cas d'une pluralité de dispositifs élémentaires, au moins deux cellules de modulation de la lumière desdits dispositifs comportent des pigments interférentiels identiques ou différents et ont donc une coloration identique ou différente.

L'invention propose encore un procédé de modulation de la lumière, par réflexion ou transmission, caractérisé par le fait qu'il comporte la combinaison de phases suivantes:
1. On réalise un matériau selon l'invention.
2. On réalise une couche dudit matériau d'une épaisseur comprise entre quelques micromètres et plusieurs dizaines de micromètres.
3. On dispose une première électrode (électrode de travail), transparente ou substantiellement transparente, au contact d'une première face de ladite couche de matériau.
4. On dispose une seconde électrode (contre-électrode) au contact d'une seconde face de ladite couche de matériau et on forme ainsi une cellule élementaire de modulation de la lumière.
5. Pendant une phase d'écriture, d'une certaine durée, on applique à l'électrode de travail une tension électrique négative par rapport à celle de la contre-électrode, de manière, que pendant cette phase d'écriture, soit écrit au moins un point-image ou un segment d'image, c'est-à-dire obtenu un accroissement de densité optique dans la région de l'interface entre l'électrode de travail et ladite couche de matériau; et
6. Pendant une phase d'effacement, ultérieure à une phase d'écriture, on fait passer, entre les électrodes, un courant électrique dont le sens est opposé à celui du courant électrique de la phase d'écriture, de manière que, pendant cette phase d'effacement, le point-image ou le segment d'image précédemment écrit soit effacé, c'est-à-dire que l'accroissement de densité optique précédemment obtenu diminue ou disparaisse;

le procédé permettant réversiblement et répétitivement d'écrire et d'effacer des points-image ou segments d'images.

L'invention propose en outre un procédé de fabrication d'un dispositif de modulation de la lumière comportant une multiplicité de points-image et/ou segments d'image, caractérisé en ce qu'il comporte l'application, à l'aide des techniques dites de "films épais" -telles qu'en particulier les techniques de sérigraphie- d'une couche de matériau selon l'invention puis d'une couche de matériau de contre-électrode chacune fractionnée en portions de couche définies et distribuées selon des configurations superficielles conjuguées à une configuration superficielle d'électrodes de travail transparentes.

L'invention propose enfin un procédé de fabrication d'un dispositif de modulation de la lumière, caractérisé par le fait qu'on fabrique, selon les techniques connues notamment d'extrusion, laminage, calandrage, enduction, une pellicule, feuille ou bande composite formée au moins d'une couche de matériau selon l'invention, associée à une contre-électrode, on applique cette pellicule, feuille, bande préférentiellement souple sur un substrat transparent comportant une configuration superficielle d'électrodes transparentes, et on découpe dans cette pellicule ou feuille composite, à l'aide des techniques connues notamment de poinçonnage, découpe à l'emporte-pièce, découpe au laser, d'éléments en forme de points, segments ou bandes.

On va dans ce qui suit décrire plus en détail des particularités de l'invention.

On convient, dans la suite du texte des définitions suivantes:

"Point-image" ou "segment d'image": zone ou surface délimitée dont la densité optique ou la réflectivité ou la coloration est susceptible d'être accrue (c'est-à-dire d'acquérir en vision par réflexion un changement d'aspect et/ou de s'opacifier partiellement ou complètement en vision par transmission si elle est transparente) et, inversement, diminuée pour revenir notamment à son aspect d'origine (réflexion d'origine et/ou transparence d'origine). Le terme de point-image est de préférence réservé à une surface petite (par exemple par rapport à la surface d'un écran de dispositif de modulation de la lumière qui en contient une multiplicité), souvent de forme circulaire, carrée ou légèrement rectangulaire, répétée, à la surface d'un écran de dispositif d'affichage qui en contient une multiplicité, identiquement à elle-même selon les noeuds d'un réseau (par exemple carré, carré centré, hexagonal compact, notamment) qui occupe des régions ou la totalité de la surface de l'écran. Le terme de segment d'image est de préférence réservé à une surface pouvant être importante (par exemple par rapport à la surface d'un écran de dispositif de modulation de la lumière qui en contient une multiplicité), de forme quelconque mais souvent allongée, associée à la surface d'un écran de dispositif d'affichage qui en contient une multiplicité, à d'autres segments d'image de même forme et/ou de formes différentes selon des arrangements géométriques spécifiques, tels que, par exemple, l'arrangement bien connu de sept segments permettant la représentation des chiffres de 0 à 9 par coloration ou opacification sélective de combinaisons adéquates de ces segments.

"Cellule élémentaire de modulation de la lumière" ou "dispositif élémentaire de modulation de la lumière" (ou en abrégé cellule, dispositif élémentaire): structure complète nécessaire à la création d'un point-image ou segment d'image et à son fonctionnement réversible lorsque la cellule est commandée électriquement. Une cellule élémentaire de modulation électrochromique comprend au moins, comme composants, convenablement disposés et associés, une première électrode ou électrode de travail, transparente, une seconde électrode ou contre-électrode (transparente ou non, selon que le point image ou segment d'image est observé par transmission de la lumière ou par réflexion), un conducteur ionique ou matériau électrolytique placé entre les électrodes, des moyens d'électrochromisme et des moyens de connexion électrique à une source extérieure de tension électrique permettant la commande de la cellule et, si une cellule élémentaire fait partie d'une multiplicité de cellules élémentaires dans un même dispositif d'affichage, des moyens d'adressage (direct, multiplexé, etc...) permettant de la commander sélectivement. Dans la suite du texte, on utilise plutôt l'expression de "cellule élémentaire de modulation" pour désigner la structure minimale indispensable à l'obtention d'un point-image ou segment d'image conformément à l'invention et l'expression "dispositif élémentaire" pour désigner un dispositif comportant une cellule élémentaire unique et des composants ou constituants extrinsèques ou périphériques nécessaires à son fonctionnement soit comme dispositif unitaire, soit combiné à un ou plusieurs autres dispositifs élémentaires dans un dispositif composé ayant une pluralité de cellules associées. De tels constituants ou composants extrinsèques sont, par exemple, des connexions électriques associées aux électrodes; des moyens de masquage de la périphérie de la cellule; un substrat transparent pour l'électrode transparente.

"Dispositif autonome de modulation de la lumière": au moins un dispositif élémentaire de modulation ainsi que les autres composants spécifiques permettant d'utiliser le dispositif comme une unité autonome, parmi lesquels notamment: supports ou substrats mécaniques confiant au dispositif autonome une rigidité structurelle; boîtier; encapsulation; connexions électriques internes au dispositif autonome; connecteur(s) ou zone(s) de connexion auquel ou à laquelle sont raccordés, par le moyen des connexions électriques internes, les dispositifs élémentaires du dispositif autonome, permettant de relier aisément ce dernier à l'électronique de commande et d'adressage et à la source d'énergie électrique associée; circuit imprimé pouvant éventuellement faire fonction, isolément ou en combinaison, notamment de support mécanique, de connecteur ou de support de connecteur, de support d'une partie de l'électronique associée. Un tel dispositif autonome peut être par exemple un dispositif communément appelé dispositif, panneau ou écran d'affichage ou plus généralement un quelconque dispositif électro-optique des plus divers.

"Surface d'écran d'un dispositif d'affichage": la surface qui comprend, encadre et relie tous les points-image et/ou segments d'image du dispositif.

On entend également par point-image (ou segment d'image) et cellule élémentaire de modulation l'aire colorable, densifiable ou opacifiable et la cellule élémentaire correspondante, quelles que soient leur forme et leur taille, des dispositifs de modulation de la lumière qui ne sont pas des dispositifs d'affichage proprement dits, par exemple des dispositifs de transmission variable ou de réflexion variable de la lumière, et ne comportent souvent qu'une seule cellule élémentaire notamment et par exemple fenêtres, vitrines, écrans, pare-brise, lunettes, à transparence variable, valves de lumière, obturateurs, miroirs à réflexion variable, dispositifs d'amplification de la lumière.

"Consistance solide": la consistance d'un matériau présentant, en l'absence de contraintes extérieures appliquées, l'aspect d'un solide. La consistance solide inclut de manière non restrictive, la consistance d'un milieu pâteux de très haute viscosité, la consistance d'un fluide thixotrope à l'état de repos, la consistance d'un gel ou d'un milieu gélifié, la consistance d'une pellicule de polymère plastifié.

"Consistance fluide": celle d'un liquide par opposition à la consistance solide telle qu'elle a été définie précédemment.

"Filmogène": l'aptitude à former un film dans le système du mélange existant, qui comprend aussi les autres constituants du mélange.

"Primitivement hydrosoluble": hydrosoluble au moins avant incorporation dans le matériau électrolytique ou dans une composition formatrice de matériau électrolytique. Une fois le matériau électrolytique constitué, l'hydrosolubilité primitive de la résine peut être perdue partiellement ou totalement, réversiblement ou irréversiblement, par exemple, suite à une réticulation par un agent réticulant.

"Couche": un feuillet pellicule ou film de matière homogène, hétérogène ou composite, présentant généralement une surface étendue par rapport à son épaisseur et préférentiellement mais non limitativement d'épaisseur au moins sensiblement constante. Une telle couche peut être simple ou composite lorsqu'elle comporte elle-même plusieurs couches. Une telle couche peut être d'étendue non fractionnée ou, au contraire, être fractionnée en portions de couche. Dans la suite du texte, on utilise le terme couche pour cette acception générale et l'une quelconque de celles de détail.

"Faible épaisseur" d'une couche du matériau électrolytique: une épaisseur préférentiellement comprise entre quelques microns et plusieurs dizaines de microns.

"Faible épaisseur" d'une électrode: une épaisseur préférentiellement comprise entre quelques centaines d'Angströms et plusieurs centaines de microns.

"Faible épaisseur" d'un dispositif de modulation: une épaisseur petite devant sa surface, préférentiellement comprise entre quelques microns et plusieurs centaines de microns, l'épaisseur d'un substrat pouvant ne pas être comprise.

"Mélange homogène": mélange dont, à l'échelle macroscopique, les constituants sont indiscernables les uns des autres, la structure apparaissant comme continue.

"Alliage": l'association ou combinaison de plusieurs espèces métalliques différentes, qu'il s'agisse d'une solution solide, d'un composé intermétallique, d'une juxtaposition de cristallites de chaque métal ou de toute autre forme d'association ou de combinaison, obtenue par codéposition de plusieurs métaux.

La création directe de couleurs, c'est-à-dire la création électrochimique d'espèces colorées à partir d'espèces non colorées, n'est actuellement pas possible avec les dispositifs d'affichage électrochromique par modulation de la lumière. Toutes les méthodes de création de couleur par dispositif d'affichage électrochromique par modulation de la lumière par réflexion sont basées sur la création réversible d'espèces noires et sur leur localisation dans la cellule.

Les dispositifs d'affichage électrochromique par modulation de la lumière agissent par réduction électrochimique réversible d'une (ou de plusieurs) espèce(s) ionique(s) non colorée(s) en un métal ou alliage métallique de couleur noire, et viennent à leur forme initiale incolore par réoxydation. La densité optique ainsi créée augmente avec la charge en circulation, allant du transparent à l'opaque par toute une échelle de gris. Le matériau noir est généré à l'interface entre l'électrode frontale transparente et le matériau électrochrome.

Une cellule de modulation de la lumière possède donc la capacité à générer à l'interface entre l'électrode transparente et le matériau électrolytique un filtre de transmission variable de la lumière avec des caractéristiques de gris intermédiaires. Si un réflecteur blanc est placé derrière ce filtre et si une lumière blanche arrive sur ce réflecteur par l'intermédiaire du filtre, ce dernier contrôlera la quantité de lumière réfléchie atteignant l'observateur, celle-ci allant de quasiment aucune perte à une extinction complète, mais la lumière réfléchie restera toujours d'une blancheur pure.

Ce comportement est la base du fonctionnement noir et blanc avec une échelle continue de gris des dispositifs d'affichage électrochromique par modulation de la lumière par réflexion utilisant la lumière ambiante ou une lumière supplémentaire comme source (plus ou moins pure) de lumière blanche. Dans un tel cas, le réflecteur blanc est en pratique un pigment blanc diffusant ayant un indice de réfraction élevé tel que du dioxyde de titane sous forme cristalline rutile ou anatase, dispersé sous forme de petites particules à l'intérieur de la totalité du matériau électrolytique ou à l'intérieur d'une couche formée par celui-ci. L'utilisation d'un pigment diffusant disperse la lumière réfléchie selon une courbe de Lambert, ce qui est favorable à l'obtention d'un contraste élevé quels que soient les angles avec lesquels on observe le dispositif d'affichage. Un réflecteur blanc non diffusant peut cependant être utilisé, générant d'autres caractéristiques visuelles comme nous le verrons ci-dessous.

Ce comportement est également le fondement sur lequel se base le contrôle et la création de couleurs selon deux méthodes possibles: 1) on garde le réflecteur blanc et on ajoute un filtre coloré devant le filtre intermédiaire de transmission variable de la lumière; ce dernier contrôlera la quantité de lumière réfléchie colorée sans altérer son spectre; 2) on remplace le réflecteur blanc par un coloré; seule la composante colorée de la lumière blanche incidente sera réfléchie et le filtre intermédiaire de transmission variable de la lumière contrôlera la quantité de lumière réfléchie sans altérer la composition spectrale.

L'utilisation de filtres de couleur est l'application de la première méthode indiquée ci-dessus. C'est la méthode utilisée dans beaucoup de techniques pour écran plat, particulièrement dans des écrans LCD. Les filtres de couleur peuvent n'être que de fines feuilles colorées de plastique transparent. Ils doivent être placés entre l'observateur et le filtre de transmission variable de la lumière. En pratique, avec un dispositif d'affichage électrochromique par modulation de la lumière, ils doivent être placés sur la face frontale du panneau de verre ou plastique frontal.

Ce procédé est utilisable quand la taille du point-image est grande par rapport à l'épaisseur du panneau de verre ou plastique, c'est-à-dire quand les points sont gros à très gros. Cependant, quand la taille du point-image diminue, il y a des dysfonctionnements croissants entre les points et leurs filtres de couleur en vue latérale du fait du parallax. Les filtres de couleur sont en général non utilisables pour de petits points-image.

Les filtres de couleur pourraient être cependant utilisables pour les points-image de n'importe quelle taille s'ils pouvaient être déposés sur la face arrière du panneau de verre, avant le dépôt de la couche de TO ou ITO. Mais cette technique n'est pas encore disponible.

L'utilisation de pigments colorés et de colorants est une application du second procédé mettant en oeuvre un réflecteur coloré. Deux variantes doivent être considérées:
a) Utilisation de pigments colorés insolubles.
   Des pigments colorés insolubles peuvent remplacer à l'intérieur du matériau électrolytique (ou à l'intérieur de la couche formée par celui-ci) le pigment de dioxyde de titane utilisé comme réflecteur blanc. Il est également possible de les combiner avec le dioxyde titane pour améliorer la luminance (aux dépens de la saturation).
b) Utilisation de colorants solubles.
   Les colorants solubles sont utilisables mais pas seuls: ils n'ont en général aucun pouvoir couvrant et la contre-électrode apparaît à l'arrière-plan et interfère avec la lumière colorée et entrave le contrôle. Les colorants doivent être utilisés en combinaison avec un pigment ou un composé similaire possédant un pouvoir couvrant, tel encore une fois que le dioxyde de titane.

Le problème potentiel majeur de l'utilisation de pigments et colorants est leur stabilité dans l'environnement sévère où ils se trouvent. Cet environnement peut altérer ou détruire à long terme les groupements fonctionnels chromogènes et de ce fait dégrader à long terme la couleur et/ou créer une décoloration.

Dans des cellules de modulation de la lumière telles que par exemple celles du document US 910 090 (demande de brevet), l'environnement est potentiellement agressif à différents égards. Tout d'abord, les colorants solubles y sont dissous, et les pigments insolubles sont au contact avec un milieu électrolytique extrêmement concentré contenant une extrêmement grande concentration d'halogénures. Certains colorants peuvent ne pas résister à ce milieu.

En outre, les colorants solubles sont, et les pigments insolubles peuvent être sujets à des contraintes électrochimiques cycliques aux électrodes, c'est-à-dire à l'application cyclique de potentiels d'oxydation et de réduction. Les colorants solubles sont inévitablement sujets à de telles contraintes qui peuvent générer une dégradation irréversible par réduction et/ou oxydation. Ceci peut être évité avec les pigments en les confinant dans une couche centrale du matériau électrolytique pris en sandwich entre deux couches de pigments exempts de matériau électrolytique.

Par conséquent, le résultat quant à la stabilité de la couleur peut être uniquement déterminé en effectuant des tests empiriques, en temps réel, sur un grand nombre de pigments ou colorants. De tels tests peuvent probablement être restreints pour les pigments insolubles en les incorporant dans le matériau électrolytique et en enregistrant l'occurrence ou la non occurrence des changements. Ils doivent également comprendre, pour les colorants solubles, le cycle de fonctionnement des cellules contenant de tels colorants.

Des tests réalisés avec de grandes catégories de colorants et de pigments indiquent que beaucoup de colorants sont utilisables, au moins dans un petit intervalle. La tendance générale est que les couleurs semblent être plus stables avec les pigments qu'avec les colorants solubles.

La découverte de pigments et de colorants appropriés semble être relativement facile mais l'acquisition fiable de données quant à leur stabilité à long terme dans des dispositifs d'affichage électrochromique par modulation de la lumière, nécessiterait un examen très complet, très long, en temps réel durant une période et un nombre de cycles en relation étroite avec les heures réelles prévues d'utilisation et de durée de vie, avec le nombre réel prévu de cycles écriture-effacement, et avec aucune certitude de trouver finalement un jeu de colorants stables.

On a d'abord réussi à développer une simplification de ce processus pour éviter une telle surcharge de travail et incertitude et pour rendre la couleur immédiatement disponible sans crainte de dégradation dans le temps.

Selon l'invention, on a trouvé un matériau destiné à des procédés, des cellules, des dispositifs électrochimiques de modulation de la lumière, par réflexion ou transmission, ledit matériau possédant une conductivité ionique et étant tel que, en combinaison:
1. Il est constitué par un mélange homogène de consistance solide, comportant les constituants suivants:
   (a) un sel hydrosoluble de sels d'au moins un métal cathodiquement déposable à partir d'une solution aqueuse d'un de ses ions simples ou complexes;
   (b) au moins une résine polymère filmogène primitivement hydrosoluble;
   (c) de l'eau;
   (d) un couple redox auxiliaire;
2. Il est conformable en couche continue d'une épaisseur comprise entre notamment quelques microns et plusieurs dizaines de microns;

le matériau étant capable de, réversiblement (1) développer des dépôts de métal ou d'alliage par réduction cathodique d'au moins un ion métallique déposable présent dans le matériau; et (2) effacer, par oxydation anodique, les dépôts et réincorporer dans l'état d'origine l'ion ou les ions métalliques produits par cette oxydation;
caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

Selon l'invention, on a encore trouvé un matériau destiné à des procédés, cellules et dispositifs, électrochimiques de modulation de la lumière, par réflexion ou transmission, constitué au moins par un mélange homogène, d'au moins:
(a) un sel ou un mélange de sels d'au moins un métal qui peut être réversiblement déposé cathodiquement et oxydé anodiquement à partir d'une solution aqueuse d'un de ses ions simples ou complexes;
(b) un sel ou un mélange de sels d'au moins un métal ou cation non électrodéposable à partir d'une solution aqueuse;
(c) au moins une résine polymère filmogène primitivement hydrosoluble; et
(d) de l'eau;

ledit matériau possédant une électroconductivité ionique, et en outre comprenant un couple redox auxiliaire réversible;
ledit matériau étant capable, réversiblement:
(a) de développer par réduction cathodique d'au moins un ion métallique électrodéposable présent dans le matériau un dépôt de métal ou d'alliage métallique;
(b) de dissoudre par oxydation anodique le dépôt de métal ou d'alliage métallique et de réincorporer dans leur état originel l'ion ou les ions métalliques produits par cette oxydation;
(c) de développer par oxydation anodique la forme oxydée du couple redox auxiliaire;
(d) de développer par réduction cathodique la forme réduite du couple redox auxiliaire;

les proportions de sels étant sélectionnées pour que la proportion pondérale du sel ou mélange de sels d'au moins un métal ou cation non électrodéposable soit au moins égale à celle du sel ou mélange de sels d'au moins un métal qui peut être réversiblement déposé cathodiquement et oxydé anodiquement à partir d'une solution aqueuse d'un de ses ions simples ou complexes; et le mélange de sels étant hydrosoluble,
caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

Selon l'invention, on peut constituer une cellule élémentaire améliorée de modulation (par réflexion ou par transmission) de la lumière en disposant une première électrode ou électrode de travail, électroniquement conductrice, transparente, au contact d'une face d'au moins une couche (ou portion de couche) d'au moins un matériau de l'invention, notamment comprise entre de l'ordre de quelques microns et plusieurs dizaines de microns d'épaisseur et une seconde électrode ou contre-électrode, au contact de l'autre face de la couche de matériau électrolytique. On peut décrire un point-image ou un segment d'image, c'est-à-dire faire apparaître un accroissement de coloration dans la région de l'interface entre l'électrode de travail et la couche de matériau, en appliquant à l'électrode de travail une tension électrique négative de l'ordre d'une fraction de Volt à quelques Volts par rapport à la contre-électrode pendant une certaine durée (phase d'écriture); on peut maintenir ce point-image ou segment d'image ainsi écrit, c'est-à-dire l'accroissement de coloration pendant au moins un certain temps en supprimant la tension électrique appliquée (suppression de la différence de potentiel appliquée extérieurement) (phase de maintien); on peut également maintenir le point-image ou segment d'image écrit, généralement pendant une durée plus longue que précédemment, en appliquant une tension d'écriture proche de la force électromotrice que peut présenter la cellule élémentaire dans l'état écrit; on peut également (phase d'effacement) effacer de partiellement à totalement le point-image ou segment d'image écrit, c'est-à-dire que l'accroissement de coloration obtenu pendant la phase d'écriture précédente est diminuée ou supprimée en faisant passer entre les électrodes un courant en sens opposé au courant de la phase d'écriture. On peut enfin maintenir le point-image ou segment d'image effacé. On peut recommencer répétitivement les phases d'écriture, d'effacement et de maintien.

Outre sa caractéristique de constitution déjà mentionnée, le matériau mis en oeuvre dans la cellule élémentaire a comme caractéristiques qu'il possède une conductivité ionique; qu'il a selon un premier mode de mise en oeuvre une consistance solide et possède une déformabilité plastique ou viscoélastique; qu'il a selon un second mode de mise en oeuvre une consistance fluide; qu'il est conformable en couche continue de faible épaisseur; et qu'il a au moins pour fonctions non seulement de participer à l'écriture ou à l'effacement d'un point-image ou segment d'image, mais aussi de permettre le passage du courant électrique entre l'électrode de travail et la contre-électrode pendant l'écriture et pendant l'effacement et cela par réduction cathodique d'ions métalliques déposables qu'il contient, en combinaison avec l'électrode de travail (phase d'écriture); par oxydation anodique et réincorporation dans l'état d'origine des ions métalliques produits par cette oxydation, en combinaison avec l'électrode de travail (phase d'effacement); et enfin par transport dans chaque sens, respectivement, des charges électriques sous forme ionique, entre l'électrode de travail et la contre-électrode, en quantité égale aux charges électriques injectées sous forme électronique au matériau amélioré par l'électrode de travail pendant l'écriture; et aux charges électriques retirées sous forme électronique du matériau amélioré par l'électrode de travail pendant l'effacement.

Un procédé électrochromique de modulation de la lumière, par réflexion ou transmission mis en oeuvre par la cellule et le matériau ainsi décrits comporte la combinaison de phases suivantes: on réalise au moins un tel matériau; on réalise au moins une couche d'au moins un matériau d'une épaisseur comprise entre notamment quelques microns et plusieurs dizaines de microns; on dispose les électrodes de la cellule au contact des faces de ladite couche de matériau amélioré; pendant au moins une phase d'écriture, d'une certaine durée, on applique à l'électrode de travail une tension électrique négative par rapport à celle de la contre-électrode, de manière que pendant cette phase d'écriture, soit écrit au moins un point-image ou un segment d'image; pendant au moins une phase d'effacement, ultérieure à une phase d'écriture, on fait passer entre les électrodes, un courant électrique dont le sens est opposé à celui du courant électrique de la phase d'écriture, de manière que, pendant cette phase d'effacement, le point-image ou le segment d'image précédemment écrit soit effacé; le procédé étant répétitif et pouvant comporter plusieurs couples d'une phase d'écriture et d'une phase d'effacement.

On trouve que le point-image ou segment d'image écrit est une surface délimitée par un contour remarquablement net, correspondant à l'intersection des projections orthogonales, sur la surface d'écran de la cellule, des aires des deux électrodes et de la couche de matériau.

Par exemple, si la contre-électrode possède une aire dont la projection est incluse dans celle de l'électrode de travail et de la couche de matériau amélioré, le point-image ou segment d'image écrit reproduit exactement la forme de la contre-électrode, bien qu'il se forme à une certaine distance de cette dernière, sans qu'on observe le contour flou ou diffus, quels que soient les aspects précédemment décrits. En outre, le point-image ou segment d'image, une fois écrit, ne diffuse pas au-delà de son contour et n'est pas dilué par la périphérie non colorée ou densifiée.

L'obtention dans de telles conditions, et pour tous les aspects qu'on peut obtenir, d'un contour net du point-image ou segment d'image écrit est d'une grande importance. S'il est en effet connu dans les procédés électrochromiques de l'art antérieur d'obtenir des points-image ou des segments d'image à contour net en délimitant selon un tel contour l'électrode transparente ou encore le matériau électrochrome, dans les cas fréquents où ce dernier est une couche mince solide déposée sur l'électrode transparente, cette délimitation, par de tels moyens, rend la fabrication complexe et coûteuse et réduit la résolution et le contraste moyen, notamment dans le cas d'un dispositif d'affichage dit matriciel qui comporte une matrice de points-image placés aux intersections d'un réseau de lignes conductrices horizontales et d'un réseau de colonnes conductrices verticales.

Selon l'invention, la délimitation du contour de chaque point-image ou segment d'image qu'on peut ramener à l'intersection des aires d'une électrode transparente et d'une contre-électrode toutes deux allongées et de directions générales perpendiculaires entre elles, le matériau amélioré ayant une aire englobant au moins cette intersection, se prête pour tous les aspects qu'on peut obtenir pour le point-image ou segment d'image à des constructions d'une extrême simplicité et permet d'obtenir des points-image ou segment-image de très petite dimension ainsi que de réduire à une valeur minimum les intervalles entre les points-image ou segments d'image adjacents.

De manière surprenante, la densité optique ou la réflectivité du point-image ou segment d'image sont uniformes à l'intérieur de son contour jusqu'à des dimensions importantes de ce point-image ou segment d'image, de l'ordre de un à plusieurs centimètres carrés, sans précautions spéciales. Au-delà, en raison de la résistivité de l'électrode de travail, une géométrie convenable des zones ou points d'amenée ou de prélèvement du courant, c'est-à-dire des zones d'amenée du courant électrique sur l'électrode de travail et, éventuellement, sur la contre-électrode 4, est nécessaire pour assurer une densité de courant suffisamment uniforme pour obtenir une densité optique ou une réflectivité uniforme.

Plus précisément, on peut, dans les deux modes de vision (transmission, réflexion), produire, en modulant la charge électrique d'écriture, une échelle continue allant de l'absence initiale de réflectivité ou densité optique en vision par réflexion, ou de la transparence initiale en vision par transmission, respectivement, à une réflectivité spéculaire élevée ou densité optique élevée.

L'obtention d'une telle échelle continue est importante notamment respectivement pour la commande de la transmission de la lumière et de la chaleur et pour l'affichage d'images de très haute qualité graphique.

On peut obtenir, à partir de l'état effacé, une augmentation de densité optique ou de réflectivité avec une durée d'application de la tension électrique d'écriture de quelques millisecondes seulement à quelques dizaines de milliseconde (phase d'écriture) et une disparition de cette densité optique avec une durée d'effacement du même ordre de grandeur (phase d'effacement).

Le procédé d'écriture peut être mis en oeuvre de façon à présenter un seuil de tension électrique bien défini et de valeur élevée, c'est-à-dire qu'en appliquant une tension électrique d'écriture inférieure à ce seuil à une cellule élémentaire, le point-image ou segment d'image ne s'écrit pas. Un tel seuil de tension électrique d'écriture est indispensable pour l'adressage multiplexé d'un dispositif d'affichage matriciel.

L'effacement du point-image ou segment d'image écrit (phase d'effacement) est obtenu en faisant circuler dans la cellule élémentaire un courant de sens opposé à celui du courant d'écriture (phase d'écriture), ce qui est obtenu notamment généralement soit en appliquant aux électrodes une tension électrique de sens opposé à celui de la tension d'écriture; soit, dans le cas où la cellule présente une force électromotrice, par simple court-circuit.

Le procédé de modulation selon l'invention permet réversiblement et répétitivement d'écrire et d'effacer des points-image ou segments d'image.

Selon l'invention, on écrit un point-image par réduction cathodique dans la région de l'interface électrode de travail couche de matériau amélioré, d'ions métalliques présents dans la couche de matériau amélioré en métal ou alliage métallique qui électrocristallise selon des modes particuliers présentant des caractéristiques remarquables de réflectivité spéculaire ou de densité optique, d'uniformité, de précision de contour, d'échelle de réflexion, et d'absence de diffusion ou dilution, etc..., décrites plus haut. Et on efface le point-image ou segment d'image par oxydation anodique du dépôt de métal ou d'alliage métallique ainsi formé. Le matériau amélioré est donc déjà caractérisé au moins par cette double fonction d'assurer cette écriture et de permettre cet effacement. On observe que le dépôt métallique formé dans la région interfaciale est susceptible d'être redissous par oxydation anodique, sans qu'il subsiste de dépôt résiduel et sans que la réinjection massive des ions métalliques produits par cette oxydation dans le matériau amélioré ne produise de phénomènes ou processus parasites ou nuisibles (tels que par exemple une floculation ou un "salting out" local du polymère filmogène).

Le dépôt cathodique de métal ou d'alliage selon les modes particuliers d'électrocristallisation observés et sa dissolution par oxydation anodique s'obtiennent avec des couches de matériau électrolytique contenant, selon les cas, un métal seul ou plusieurs métaux pris parmi la plupart des métaux cathodiquement déposables seuls ou codéposables à plusieurs, ou encore non déposables seuls, mais codéposables avec d'autres, à partir d'une solution aqueuse de leurs ions simples ou complexes ou d'une combinaison d'entre eux, notamment: zinc, cadmium, plomb, argent, cuivre, fer, cobalt, nickel, étain, indium, platine, palladium, or, bismuth, antimoine, tellure, manganèse, thallium, sélénium, gallium, arsenic, mercure, chrome, tungstène, molybdène, associés à un grand nombre de résines polymères filmogènes hydrosolubles.

Il convient de remarquer que l'emploi, selon l'invention, dans le matériau, d'halogénures de métaux ou cations non électrodéposables préférentiellement alcalins comme sels hydrosolubles en concentration majoritaire et l'emploi des anions halogénure, en proportion substantiellement exclusive, donne à ces anions halogénure, spécialement lorsque le rapport des sels solubles à l'eau est élevé, un pouvoir complexant élevé permettant de solubiliser dans le matériau amélioré des degrés d'oxydation qui autrement seraient peu solubles ou insolubles, en particulier comme halogénures simples, ou instables notamment en solution concentrée. C'est par exemple le cas du cuivre (I), de l'indium (III), de l'or (I), de l'argent (I), du bismuth (III), du plomb (II), de l'antimoine (III), du mercure (II), dont on peut ainsi étendre considérablement l'utilisation dans le matériau amélioré.

Selon l'invention, le matériau, sans inconvénient pour l'obtention de la densification optique du point-image ou segment d'image avec les caractéristiques mentionnées ci-dessus ainsi que sans inconvénient pour son effacement, contient en plus des cations électrodéposables déjà mentionnés des ions de métaux ou cations non électrodéposables à partir d'une solution aqueuse en proportion telle que les sels des seconds soient en concentration pondérale au moins égale à supérieure à celle des premiers.

Une couche de matériau selon l'invention est généralement une couche continue c'est-à-dire non granulaire, transparente ou substantiellement transparente. Suivant la nature des ions qu'elle contient, elle peut être incolore ou colorée. Dans le cas où la cellule élémentaire fonctionne en transmission, auquel cas la contre-électrode est aussi une électrode transparente, la couche de matériau est laissée sous cette forme transparente ou subtantiellement transparente et aussi faiblement colorée que possible, sauf si elle constitue aussi un filtre coloré, par exemple pour la réalisation de lucarnes colorées à transmission variable ou de dispositifs d'affichage en couleur. Dans le cas où la cellule élémentaire fonctionne uniquement par réflexion, il est généralement nécessaire d'ajouter à la couche de matériau un pigment masquant et/ou contrastant compatible avec les autres constituants du matériau: un tel pigment a pour effet de masquer la contre-électrode si celle-ci ne constitue pas un fond de couleur et/ou de contraste satisfaisant, d'atténuer une possible teinte colorée du matériau, si une telle coloration existe du fait de la composition et n'est pas désirable et de constituer un fond offrant le contraste le plus souhaitable, par exemple avec l'aspect noir ou avec l'aspect spéculaire du point-image ou segment d'image écrit. Un pigment blanc tel que le dioxyde de titane, notamment sous les formes cristallines rutile et anatase, dispersé sous forme particulaire dans la couche de matériau ou dans une fraction seulement de l'épaisseur de cette couche permet d'obtenir un fond particulièrement blanc. De même, un pigment noir tel qu'un noir de carbone permet d'obtenir un fond particulièrement noir.

Le matériau selon l'invention peut comporter selon les cas, les ions d'un métal seul ou de plusieurs métaux pris parmi la plupart des métaux cathodiquement déposables seuls ou codéposables à plusieurs. On peut ainsi selon les cas, changer les conditions d'obtention du dépôt d'un seul de ces métaux et/ou modifier les particularités d'écriture ou d'effacement et/ou l'aspect d'un tel dépôt ou encore obtenir par réduction cathodique un alliage pouvant présenter un aspect et/ou des caractéristiques d'écriture et/ou d'effacement et/ou des particularités combinant ceux des métaux déposés individuellement, mais aussi présenter un aspect et/ou des caractéristiques et/ou des particularités d'écriture et d'effacement complètement nouveaux, par exemple, en ce qui concerne la mémoire (c'est-à-dire la persistance de la coloration, réflexion spéculaire, densification ou opacification du point-image ou segment d'image en l'absence de tension électrique imposée à la cellule élémentaire).

L'utilisation de pigments interférentiels s'est trouvée être un bon choix pour la création de couleurs et leur stabilité dans des dispositifs d'affichage électrochromique par modulation de la lumière.

Les pigments interférentiels ne sont pas et ne contiennent pas de colorants classiques. La génération de couleur avec des pigments interférentiels est due non pas à l'existence de groupements fonctionnels ou espèces chromogènes, mais à des réflexions interférentielles de lumière sur les interfaces entre des matériaux d'indice de réfraction différents.

Les pigments interférentiels sont obtenus en revêtant des paillettes de mica avec une fine couche d'un matériau à indice de réfraction élevé tel que du dioxyde de titane et/ou de l'oxyde de fer (III). L'épaisseur de cette couche détermine la couleur générée par le pigment. Le mica n'est qu'un substrat pour l'enduction qui est seule responsable de la couleur et des autres propriétés optiques.

Quand une lumière blanche est incidente sur une paillette de pigment interférentiel, la lumière est partiellement réfléchie par les deux faces du dioxyde de titane (ou de l'oxyde de fer) et conduit à des réflexions multiples entre ces deux faces. A chaque réflexion, une fraction du faisceau est réfléchie vers la source lumineuse et une fraction retransmise hors de l'écaille. Seule la longueur d'ondes pour laquelle les faisceaux réfléchis sont en phase, c'est-à-dire la longueur d'onde égale à l'épaisseur de l'enduction (ou à une fraction entière de celle-ci), restera comme lumière réfléchie qui présentera alors la couleur correspondante; les autres longueurs d'ondes seront détruites. Pour des raisons identiques, seule la couleur complémentaire sera transmise.

Les pigments interférentiels produisent ainsi sans colorants deux couleurs pures, complémentaires l'une de l'autre, une par réflexion, l'autre par transmission. Ces couleurs dépendent uniquement de l'épaisseur du matériau d'enduction à indice de réfraction élevé. (En plus des couleurs, si l'épaisseur est très petite, la lumière réfléchie est opale ou blanc métallique).

Les pigments interférentiels sont des paillettes plates avec des surfaces relativement importantes. Ils possèdent un indice de réfraction élevé et présentent une grande réflectivité. Quand ils sont incorporés dans un milieu mince tel qu'une couche de matériau électrolytique, ils sont comparables à une multitude de petits réflecteurs.

De ce fait, ils se comportent par rapport à la lumière extérieure d'une façon complètement différente des pigments granulaires de dioxyde de titane qui présentent un comportement lambertien. Avec une bonne orientation de la lumière ambiante ou d'une lumière supplémentaire, la réflectivité des points-image peut être augmentée dans une direction donnée, par exemple dans un cône ou une pyramide de vision. Les points-image auront ainsi dans cette direction une apparence plus brillante qu'avec des pigments diffusant la lumière, tels que des pigments granulaires de dioxyde de titane. Avec une lumière supplémentaire adéquate, il est même possible de les comparer à une lumière émettant dans ce cône de vision choisi.

Un fait surprenant résulte du fait que, quand un point-image est à l'état "off", cette réflectivité directionnelle accrue est perdue ou au moins fortement diminuée avec le même système de lumière supplémentaire, en ce qui concerne la réflexion parasite de la lumière par un point-image à l'état "off". Le dépôt noir de bismuth sur lequel la lumière se reflète de façon parasite dans l'état "off" n'a pas la même réflectivité directionnelle que le pigment interférentiel: la réflectivité n'est pas augmentée dans le cône de vision précédent. Le contraste entre les points-image à l'état "on" et "off" est donc considérablement augmenté dans le cône de vision. Ce comportement est d'une importance majeure pour la synthèse additive trichromique par réflexion.

La résistance chimique et physique des pigments interférentiels dans un environnement d'une cellule est surprenante: les constituants de ces pigments, mica et dioxyde de titane et/ou oxyde de fer (III), sont immunisés contre un matériau électrolytique à teneur en halogénure très concentrée. La stabilité des couleurs dans le temps est donc significative sans se soucier de la couleur en elle-même. C'est un avantage majeur des pigments interférentiels pour des dispositifs d'affichage électrochromique par modulation de la lumière comparés aux colorants conventionnels. Non seulement, il existe des séries de couleurs disponibles commercialement qui présenteront cette stabilité, mais n'importe quelle couleur développée (en ajustant l'épaisseur du revêtement de titane à la longueur d'onde voulue), aura la même stabilité.

Comme confirmation de cette stabilité, on peut indiquer que des points effectués, il y a deux ans et demi avec des pigments interférentiels, présentent la même couleur et le même aspect qu'un quelconque point récent de la même couleur.

Les pigments interférentiels sont des matériaux bon marché disponibles dans une grande gamme de couleurs et de tailles de particules principalement chez la société MERCK (pigment "Iriodine") et chez la société MEARL (pigment "Mearlin").

Les couleurs disponibles, sont parmi d'autres: le bleu, le rouge, le vert, l'orange, le violet, l'or, le rouge opale, le rouge-brun, le lilas, etc.

Les pigments interférentiels peuvent être introduits dans le matériau de la présente invention ou dans une couche formée par celui-ci, avec pour résultat la génération de couleurs permanentes, stables. De plus, ils sont adaptés à toutes les techniques de fabrication de dispositif d'affichage.

Avec la technique de bandes composites, comme nous le verrons ci-dessous, une bande est fabriquée pour chaque couleur avec le pigment interférentiel correspondant. Pour réaliser un dispositif d'affichage avec différentes couleurs, des points ou segments sont découpés à partir des bandes correspondantes et appliquées sur une plaque de verre enduite de ITO ou de TO dans le même afficheur; une peinture de fond noire ou un matériau masquant doit couvrir la surface entre les points-image, comme du blanc sur des afficheurs noirs.

Avec la technique de sérigraphie, un écran approprié sera utilisé pour chaque couleur, et tous les points de même couleur seront enduits en même temps avec le matériau électrolyt ique contenant le pigment interférentiel approprié.

Avec les techniques de distribution programmée de liquide et de jet d'encre, une tête de distribution distribuera chaque matériau coloré selon un motif.

Un point est "on" dans l'état initial coloré et la couleur fonce progressivement jusqu'à être d'un noir intégral (qui est l'état "off" du point-image) quand le filtre de transmission variable de lumière est obscurci par le passage d'un courant électrique dans le sens du noircissement. Le point va de l'état "off" à l'état "on" par passage du courant électrique dans le sens d'effacement. La mise en oeuvre d'un point-image coloré n'est pas différent de celle d'un point-image du noir au blanc ou du blanc au noir. Les mêmes voltages, les mêmes seuils et les mêmes autres caractéristiques électriques et autres sont mis en oeuvre. Le maniement direct et l'adressage matriciel multiplexé suivent les mêmes schémas.

Cependant, la création d'une couleur de brillance satisfaisante dans les dispositifs d'affichage électrochromique par modulation de la lumière avec des pigments interférentiels dans l'état "on" et l'extinction complète de la couleur dans l'état "off" suscite quelques problèmes. En outre, dans le cas de la technique des bandes composites, des problèmes d'application de la bande doivent également être résolus.

Tel que décrit ci-dessus, les pigments interférentiels présentent deux couleurs, une couleur par réflexion et la couleur complémentaire par transmission. La lumière transmise peut également être réfléchie par le fond, qui la rend également visible par l'observateur. Selon ce fond, les caractéristiques suivantes peuvent apparaître à l'observateur:
- sur un fond blanc ou clair, les deux couleurs sont visibles pour l'observateur. La couleur de transmission est principalement visible; la couleur de transmission est seulement visible sous un certain angle. Les deux couleurs sont faibles du fait qu'elles sont délavées par la lumière blanche intense réfléchie par le fond clair;
- sur un fond noir ou obscur, la lumière transmise est éliminée; seule la couleur réfléchie, qui est alors intense, est visible quel que soit l'angle.

Cette seconde situation est à première vue la seule favorable; voir seulement une seule couleur intense quel que soit l'angle.

Cependant, la situation peut ne pas être aussi simple. Une fine couche d'un pigment interférentiel sur un fond noir peut induire une couleur sombre. Une couleur brillante est désirée. Il semble évident d'augmenter l'épaisseur de la couche de pigment pour améliorer la situation. Cependant, une fine couche de certains des pigments interférentiels se comporte comme un fond clair dans sa totalité et la première situation peu satisfaisante avec deux couleurs faiblement visibles peut être mise en oeuvre une nouvelle fois au lieu de la production d'une seule couleur brillante.

Il peut être observé qu'en remplaçant simplement les pigments granulaires de dioxyde de titane par des pigments interférentiels, il est difficile d'arriver à la complète extinction de la couleur par passage d'un courant électrique d'écriture approprié même durant un temps prolongé: un noir total n'est pas obtenu et une certaine couleur visible reste.

L'observation microscopique d'un point-image explique ce comportement: du fait de leur forme, quelques paillettes restent sur l'électrode transparente et isolent dans une certaine mesure la surface de l'électrode "cachée" par cette paillette de la charge de l'électrolyte, réduisant le transport de masse et augmentant la chute ohmique.

Le matériau électrolytique pigmenté des bandes composites réalisées avec des pigments granulaires blancs de dioxyde de titane a un comportement plastique régulier. Quand un point est découpé à partir d'une telle bande et appliqué sous pression à un verre revêtu de TO, la couche se déforme ou s'écoule tout en gardant sa cohésion. Il est facile de chasser les bulles emprisonnées en appliquant une pression suffisante.

Un matériau électrolytique contenant des pigments interférentiels n'a pas le même comportement: les paillettes semblent collées l'une à l'autre. La conséquence est que quand un point est pressé contre un verre enduit de TO, la couche ne s'écoule pas de façon significative; si la pression est augmentée, la couche peut se casser.

On a trouvé selon l'invention que les problèmes précités sont résolus lorsque le matériau comporte au moins deux pigments interférentiels différents, mélangés et/ou juxtaposés l'un au-dessus de l'autre et/ou l'un à côté de l'autre correspondant à une ou plusieurs couleurs voulues; il comprend en outre un noir sous forme particulaire, notamment de carbone ou équivalent, et au moins un pigment non interférentiel et/ou un colorant.

Un point-image possède un fond noir naturel: la couche de graphite poreux. Avec certains des pigments interférentiels, ceci apparaît approprié pour éliminer complètement la couleur de transmission, et la teneur en pigment interférentiel du matériau électrolytique peut être augmentée pour générer une couleur plus brillante sans problèmes. Cependant, comme mentionné ci-dessus, une augmentation de la teneur en pigment du matériau électrolytique par certains autres pigments interférentiels (par exemple les séries 200 des pigments "Iriodine"), génère un développement peu satisfaisant de deux couleurs faiblement visibles au lieu d'augmenter la brillance de la couleur.

Dans ce dernier cas, la teneur en pigment peut être augmentée pour améliorer la brillance de la couleur en mélangeant, avec le pigment interférentiel dans le matériau électrolytique, un matériau particulier noir tel que du noir d'acétylène ou d'autre de carbone. La teneur en carbone est très critique par rapport à la brillance: elle doit être maintenue inférieure à 1% de la teneur en pigment interférentiel. L'effet de l'ajout même en quantité minuscule de noir d'acétylène dans le mélange d'enduction contenant les pigments interférentiels des séries considérées est important. La couleur, qui était précédemment très légère, développe une intensité tout à fait soudaine.

Une concentration appropriée du pigment interférentiel dans le mélange d'enduction pigmenté est de l'ordre de 4%, les autres composants ayant les concentrations usuelles, et le mélange étant enduit avec une barre Baker ou Conway suivant les épaisseurs utilisées.

L'obtention de l'extinction complète de la couleur du point nécessite d'espacer les paillettes de pigment interférentiel de l'électrode en TO ou ITO avec un distance suffisante pour permettre un accès correct de l'électrolyte.

Cela est obtenu en séparant la couche électrolytique pigmentée de l'électrode transparente par une couche électro-optique claire, telle que déjà utilisée avec la bande blanche. Cependant, la couche claire doit ici être substantiellement plus épaisse: elle doit être préférentiellement aussi épaisse (quand elle est équilibrée avec les sels solubles) que la couche pigmentée.

Pour de telles épaisseurs, il est préférable de formuler le mélange d'enduction clair de façon identique au mélange d'enduction pigmenté; excepté le pigment interférentiel. Si la bande composite finale apparaît trop sèche ou trop molle, la teneur en sel soluble ou au moins la teneur en bromure de lithium devra être augmentée ou diminuée en conséquence.

La grande augmentation en épaisseur de la couche électrolytique claire résout également le problème du comportement mécanique de la bande quand un point est appliqué à la plaque de verre: cette couche épaisse a une déformabilité plastique et se comporte au lieu et place de la couche pigmentée.

L'utilisation de pigments interférentiels dans des dispositifs d'affichage permet la création de multicouleurs par réflexion avec un contraste élevé par synthèse additive trichromique du fait des caractéristiques suivantes:
- disponibilité des couleurs bleues, rouges et vertes;
- disponibilité du blanc avec des paillettes réflectives;
- existence d'une réflectivité directionnelle accrue.

Le fondement de la synthèse additive trichromique est bien sûr la disponibilité des couleurs bleues, rouges et vertes. Un dispositif multicolore peut tout d'abord être sous la forme d'un réseau régulier de triades de bleu, rouge et vert. Les couleurs bleues, rouges et vertes réellement disponibles peuvent ne pas être celles optimales, bien qu'elles semblent s'en rapprocher. Comme déjà mentionné, le développement des couleurs optimales signifierait la fabrication de pigments différentiels avec des épaisseurs d'enduction correspondant aux longueurs d'onde désirées.

Un dispositif multicouleur réalisé avec des triades présenterait, avec les pigments interférentiels, des couleurs saturées, mais légèrement grisâtres. Les couleurs peuvent sembler plus brillantes, aux dépens de la saturation, en réalisant des quadratures de points bleus, rouges, verts et blancs. Ceci est rendu possible par la disponibilité des pigments interférentiels blancs d'aspect argenté de même structure et même comportement réflectif que les pigments colorés.

L'augmentation de la réflectivité directionnelle par les pigments interférentiels permet de résoudre un problème clé de la création de multicouleurs par réflexion.

Il est bien connu que la production multicouleur d'images (imprimés colorés, magazines, etc.) passive (réflective) est actuellement uniquement obtenue par synthèse soustractive trichromique. La synthèse additive n'est pas utilisée parce qu'elle donne des couleurs avec un trop faible contraste.

La raison est que le contraste, dans les mêmes conditions, est trois fois plus faible avec la synthèse additive qu'avec la synthèse soustractive. Dans la synthèse soustractive, un point rouge est un simple point. Dans la synthèse additive, un point rouge est un point parmi trois dont deux sont noirs, en conséquence, la lumière rouge donne son énergie lumineuse à une surface trois fois plus grande, réduisant proportionnellement la brillance.

L'augmentation de la lumière extérieure n'améliorera pas la situation, la lumière rouge réfléchie par le point rouge sera augmentée, mais la lumière blanche parasite réfléchie par les points noirs sera également augmentée dans les mêmes proportions, et le contraste restera le même, c'est-à-dire faible.

La solution à cette situation pourrait être de pouvoir augmenter sélectivement la réflectivité du point-image rouge par rapport au noir de la même triade, c'est-à-dire augmenter la réflectivité du point-image "on" par rapport à la réflectivité parasite des points-image "off". C'est exactement ce qui est obtenu par la réflectivité directionnelle accrue des points-image "on" Polyvision avec les pigments interférentiels qui sont absents des points-image "off" tel qu'expliqué ci-dessus.

Ainsi, l'utilisation de pigments interférentiels dans les dispositifs d'affichage permet la production de multiples couleurs par réflexion par synthèse additive trichromique avec un contraste et une brillance élevés.

Selon un mode de réalisation préférée du matériau, le mélange hydrosoluble de sels est hygroscopique et préférentiellement déliquescent en présence d'humidité atmosphérique. Selon ce mode préféré, une couche ou une pellicule de matériau de quelques microns à plusieurs dizaines de microns d'épaisseur non enfermée dans une enceinte scellée conserve, en permanence, jusqu'à une humidité atmosphérique très basse, une conductivité électrique ionique élevée qui permet de faire fonctionner la cellule de modulation élémentaire avec une tension au maximum de quelques Volts. Cette conductivité électrique ionique élevée est due au fait qu'avec des sels hygroscopiques, la couche de matériau conserve une certaine quantité d'eau en équilibre avec l'humidité atmosphérique. Cette eau interne, dans laquelle les sels se trouvent dissous en concentration très élevée, assure à la couche de matériau une conductivité ionique notable qui varie avec l'humidité atmosphérique mais reste élevée jusqu'à ses teneurs les plus basses, avec une valeur qui dépend du degré d'hygroscopicité ou déliquescence de la combinaison de sels choisie.

Selon ce mode préféré de composition du matériau, on peut éviter de sceller de façon rigoureusement étanche la cellule élémentaire de modulation de la lumière, à la différence de la plupart des dispositifs d'affichage électrochromiques de l'art antérieur, ce qui représente une simplification considérable de la fabrication de la cellule ou du dispositif et une réduction de son coût. En effet, on peut tolérer dans une très large mesure l'effet d'une pénétration d'humidité atmosphérique dans la cellule et celui d'une perte d'eau contenue dans la couche de matériau électrolytique. On peut également tolérer l'effet d'une pénétration d'oxygène atmosphérique dans la cellule. Avec les épaisseurs considérées pour la couche de matériau, les variations d'impédance dues à des variations de résistivité du matériau, elles-mêmes dues à des fluctuations de l'humidité atmosphérique dans le cas d'une cellule non scellée de façon rigoureusement étanche, apparaissent, dans un large intervalle de variation de cette dernière, secondaires par rapport à l'impédance d'ensemble de la cellule, qui comprend notamment, comme autres facteurs contribuant à l'impédance de la cellule, les multiples polarisations correspondant aux divers processus électrochimiques intervenant à chaque électrode (polarisations d'activation électrochimique, polarisations de concentration, notamment). En tout état de cause, il est possible de compenser une variation sensible de l'impédance d'ensemble de la cellule par une modification de la tension électrique d'écriture.

Une isolation protectrice de la cellule ou du dispositif est souhaitable ou même nécessaire, en cas de fonctionnement de la cellule de modulation de la lumière dans des ambiances atmosphériques extrêmes et/ou agressives et/ou corrosives, en vue de limiter ou d'empêcher l'accès du milieu extérieur aux composants de la cellule ou du dispositif. Mais l'incidence sur la structure, les problèmes de fabrication et les coûts est très différente de celle de l'obligation d'avoir à assurer à chaque cellule ou groupe de cellules ou dispositif un scellement ou une protection rigoureusement étanche capable d'assurer et de conserver une isolation protectrice rigoureusement étanche malgré les contraintes thermiques ou mécaniques auxquelles la cellule ou dispositif peut être soumis.

On peut évidemment choisir de sceller de manière rigoureusement étanche une cellule de modulation de la lumière selon l'invention. Dans ce cas, il n'est pas nécessaire que le mélange hydrosoluble de sels du matériau soit hygroscopique et préférentiellement déliquescent.

Une couche de matériau selon l'invention, par un choix approprié des constituants et de la composition, possède une consistance solide en l'absence de contraintes extérieures appliquées, et présente, sous l'effet de telles contraintes, un comportement plastique ou viscoélastique (dont les caractéristiques dépendent notamment de la nature de la résine polymère, du degré de réticulation). Ce comportement est d'une grande importance. Il permet d'une part à la couche de matériau d'être conformée aux défauts de planéité de l'une et/ou l'autre électrode, ainsi qu'à un défaut de parallélisme entre les deux électrodes assurant un excellent contact physique et électrique malgré ces défauts. D'autre part, à l'interface électrode de travail ou contre-électrode couche de matériau, ces derniers restent liés et un bon contact physique et électrique reste assuré même si une déformation globale ou locale affecte la cellule ou le dispositif de modulation de la lumière grâce à la complaisance du matériau. En outre, ce comportement plastique ou viscoélastique accroît la durée de vie, c'est-à-dire le nombre de cycles écriture-effacement accessible. Il est connu que les réactions d'écriture et d'effacement d'un dispositif électrochromique entraînent des déformations et contraintes locales dues aux changements morphologiques associés à ces réactions électrochimiques. A l'interface de deux solides susceptibles de ne présenter tous deux que des déformations élastiques dans les conditions considérées, notamment des solides fragiles, même de petites déformations peuvent entraîner de fortes contraintes dont la répétition cyclique est susceptible d'altérer la qualité du contact, spécialement du contact électrique, et de réduire la durée de vie du dispositif. Cet inconvénient, propre aux dispositifs électrochromiques de l'art antérieur où le matériau électrochrome et dans certains cas l'électrolyte sont des solides fragiles, n'affecte pas les dispositifs selon l'invention où la qualité du contact est maintenue à chaque interface électrode de travail ou contre-électrode couche de matériau, en raison de la complaisance de l'un au moins de ces solides.

Les propriétés physiques mentionnées ci-dessus du matériau de consistance solide à déformabilité plastique ou viscoélastique permettent de simplifier considérablement la construction d'une cellule ou dispositif de modulation de la lumière, de réduire les exigences vis-à-vis des matériaux constitutifs et composants et de permettre la réalisation en particulier de très grands panneaux d'affichage. En effet, il n'est pas nécessaire de prévoir un espaceur spécifique destiné à maintenir entre électrode de travail et contre-électrode un parallélisme rigoureux et un écartement précis. Une couche de matériau déposée par des techniques industrielles d'application ou d'enduction connues en général en elles-mêmes telles que lame d'air, barreau à fil, raclette, extrusion, calandrage, sérigraphie, notamment, suffit à constituer l'espaceur et à définir un écartement de précision suffisante. Le support des électrodes de travail transparentes peut être sans inconvénient, par exemple, une plaque de verre étiré. Des panneaux d'affichage de très grande surface (comprenant une multiplicité de cellules élémentaires d'affichage) peuvent être constituées sans que les déformations (mécaniques, thermiques, vibratoires) auxquelles sont susceptibles d'être sujettes des grandes surfaces puissent avoir un effet nocif sur l'intégrité physique et le fonctionnement de ces cellules élémentaires d'affichage.

Un matériau selon l'invention, par un autre choix approprié des constituants et de la composition, possède une consistance fluide. Une telle consistance fluide est obtenue notamment par l'emploi de résines polymères à bas poids moléculaire et d'autres conditions. Une consistance fluide du matériau permet de le mettre en oeuvre par exemple dans de petits dispositifs de modulation de la lumière où les deux électrodes de chaque cellule sont rigides, par remplissage des intervalles entre électrodes des cellules déjà préalablement constituées.

Par un choix approprié de la résine polymère hydrosoluble filmogène et en tenant compte d'autres facteurs de composition, le matériau de consistance solide selon l'invention, présente des propriétés adhésives et plus spécifiquement un toucher collant (connu sous l'expression "tack") ou collant de contact (connu sous l'expression "pressure sensitive adhesion"). De telles résines peuvent être notamment et non limitativement l'hydroxyéthylcellulose, la polyvinylpyrrolidone, l'alcool polyvinylique, ou équivalent. En présence d'une concentration élevée d'un pigment contrastant, ou en cas d'utilisation d'une résine polymère hydrosoluble qui ne procure pas ce toucher collant, ou encore lorsque la résine polymère se trouve fortement réticulée dans le matériau, le collant de surface peut se trouver fortement réduit ou inexistant; dans ces cas, on constitue avantageusement la couche de matériau de façon composite avec trois couches superposées dont les deux couches externes sont formulées à l'aide d'une résine adéquate et ne contiennent ni agent réticulant ni pigment contrastant, ou suffisamment peu pour ne pas affecter le toucher collant, la couche interne pouvant être dépourvue de ce toucher collant.

L'existence d'un tel toucher collant ou collant de surface permet également de simplifier la fabrication des cellules et dispositifs de modulation de lumière. En effet, la cohésion mécanique de chaque cellule peut être maintenue par les seules propriétés de collant de contact de la couche de matériau adhérant à la fois à l'électrode de travail et à la contre-électrode, sans qu'il soit nécessaire de prévoir des moyens mécaniques additionnels extérieurs destinés à maintenir la cellule. En outre, l'adhésion du matériau aux deux électrodes (de travail et contre-électrode) assure un excellent contact physique électrique du conducteur électronique et du conducteur ionique à chaque interface sans qu'il soit nécessaire d'appliquer et de maintenir une pression sur la cellule et par conséquent sans qu'il soit nécessaire de prévoir des moyens mécaniques à cet effet. La combinaison d'un tel collant de contact et de la déformabilité plastique ou viscoélastique déjà mentionnée permet de réaliser des panneaux d'affichage de grandes dimensions pouvant avoir une structure très simple et qui ne sont pas affectés par les déformations thermiques et mécaniques et les vibrations auxquelles peuvent être soumis de tels panneaux.

Dans le fonctionnement d'une cellule élémentaire électrochromique, il se produit à la contre-électrode une réaction électrochimique conjuguée de celle qui se produit à l'électrode de travail: une oxydation anodique si l'autre est une réduction cathodique, et vice versa. Il doit donc exister à la contre-électrode un couple redox auxiliaire susceptible de passer réversiblement d'un de ses termes à l'autre par oxydoréduction électrochimique; faute d'un tel couple redox auxiliaire réversible, l'oxydation et la réduction à la contre-électrode peuvent impliquer la dégradation de matériaux constitutifs de la cellule et/ou la génération d'espèces gazeuses perturbatrices du fonctionnement.

Le matériau selon l'invention contient déjà intrinsèquement au moins un premier couple redox auxiliaire qui est précisément le couple redox qui est mis en oeuvre à l'électrode de travail: le couple ion(s) métallique(s)-métal ou alliage. Cependant, avant fonctionnement de la cellule, le même terme du couple est présent à l'électrode de travail et à la contre-électrode, alors que le fonctionnement requiert la présence de termes conjugués. Toutefois, il suffit par exemple d'appliquer initialement une tension suffisante pendant quelques secondes pour créer la dissymétrie nécessaire pour que la cellule fonctionne correctement: tout se passe comme si la cellule contenait toujours une quantité suffisante d'espèces électroactives oxydables pour permettre sans dommages une telle dissymétrisation. Un couple redox auxiliaire de ce type permet un fonctionnement satisfaisant par réflexion si on incorpore au matériau un pigment masquant qui dissimule la contre-électrode. Dans le fonctionnement par transmission (avec un matériau resté transparent et une contre-électrode transparente), l'effacement du dépôt visible sur un des électrodes s'accompagne de la formation d'un dépôt visible sur l'autre électrode et la transmission maximale de la cellule est réduite.

Le matériau selon l'invention peut aussi contenir, intrinsèquement, un second couple redox auxiliaire dont la forme réduite est d'une part hydrosoluble en présence des autres constituants hydrosolubles du matériau, et, d'autre part, incolore ou peu colorée aux concentrations utilisées. Un couple redox auxiliaire de ce type permet un fonctionnement satisfaisant aussi bien en transmission qu'en réflexion, évitant en transmission l'inconvénient mentionné plus haut. La présence intrinsèque de ce second couple redox auxiliaire dans le matériau peut avoir deux origines: soit lorsqu'un ion métallique simple ou complexe cathodiquement réductible en métal, introduit comme tel dans le matériau électrolytique, peut passer réversiblement à un degré d'oxydation plus élevé; c'est le cas, par exemple de Fe(II), introduit pour créer le processus électrochromique Fe(II)<--> Fe(0), crée en même temps le couple redox auxiliaire Fe(II)<--> Fe(III); soit lorsqu'un des anions du mélange hydrosoluble de sels du matériau électrolytique peut passer réversiblement à un degré d'oxydation plus élevé, c'est notamment le cas des anions halogénure, par exemple, la présence de l'anion chlorure ou de l'anion bromure crée en même temps des couples redox auxiliaires tels que 2Cl⁻ Cl₂, 3Br⁻ Br₃.

Il convient de remarquer, que l'emploi selon l'invention, dans le matériau, d'halogénure de métaux ou cations non électrodéposables préférentiellement alcalins comme sels hydrosolubles en concentration majoritaire et l'emploi des anions halogénure en proportion substantiellement exclusive donne à ces anions halogénure un pouvoir complexant élevé permettant de solubiliser des degrés d'oxydation qui autrement seraient peu solubles, insolubles ou instables, notamment en solution concentrée. C'est par exemple le cas du cuivre (I), de l'indium (III), de l'or (I), qui permettent de constituer dans le matériau amélioré les couples redox auxiliaires Cu (I)<--> Cu (II), In (I)<--> In (III) et Au (I)<--> Au (III). On remarque aussi qu'avec un tel matériau amélioré, des couples redox auxiliaires tels que 2Cl⁻ <--> Cl₂ ou 3Br⁻ <-->Br⁻₃ sont naturellement présents intrinsèquement.

On peut aussi introduire extrinsèquement dans le matériau selon l'invention, s'il n'en contient pas intrinsèquement, un couple redox auxiliaire du type précédent, c'est-à-dire dont la forme réduite est hydrosoluble en présence des autres constituants hydrosolubles du matériau et incolore ou peu colorée aux concentrations utilisées.

Une telle présence d'un couple redox auxiliaire dans le matériau électrolytique correspond à une composition préférée du matériau particulièrement avantageuse, on trouve en effet qu'il suffit alors à la contre-électrode de présenter de simples propriétés de conduction électronique (et de transparence optique si la cellule est destinée à fonctionner par transmission) pour convenir, par opposition avec les contre-électrodes de structure et composition complexes de beaucoup de dispositifs électrochromiques de l'art antérieur. De très nombreux matériaux, notamment des matériaux commercialement disponibles, peuvent ainsi directement convenir comme matériaux de contre-électrode, notamment les matériaux utilisant des semi-conducteurs, le carbone ou le graphite, cités dans le brevet français FR-A-2618567.

Enfin, le matériau peut être associé à une contre-électrode ayant elle-même des propriétés de couple redox par exemple une contre-électrode formée d'un métal anodiquement oxydable de façon réversible (tel que par exemple le plomb auquel correspond le couple redox Pb <--> PbO₂, ou encore d'une contre-électrode recouverte d'une couche d'un oxyde ou composé solide capable d'évoluer réversiblement entre deux degrés d'oxydation différents.

Un matériau selon l'invention est un matériau continu, c'est-à-dire non granulaire, transparent, contrastable et opacifiable dans sa masse, de consistance solide et possédant une déformabilité plastique ou viscoélastique ou de consistance fluide possédant une conductivité ionique permanente qu'il est susceptible de surcroît de conserver même s'il est exposé à l'atmosphère et encore susceptible de présenter sous une consistance solide un collant de contact, lequel matériau, conformé en couche ou pellicule de faible épaisseur, préférentiellement de quelques microns à plusieurs dizaines de microns d'épaisseur, et placé au contact d'une première électrode ou électrode de travail, transparente, par une face et d'une seconde électrode ou contre-électrode par la face opposée, constitue et comprend à la fois le matériau électrochrome, l'électrolyte et un couple redox auxiliaire de la cellule de modulation de lumière ainsi constituée, et éventuellement l'espaceur, des moyens de cohésion de la cellule et des moyens de maintien des contacts électriques internes. En tant que matériau électrochrome, il est susceptible de subir au contact de l'électrode transparente de travail un changement réversible de coloration et/ou de densité optique. Par réduction cathodique, il se forme à l'interface un métal ou alliage métallique apparaissant ainsi comme un miroir, un noircissement ou une opacification et constituant un point-image ou segment d'image présentant un ensemble remarquable de caractéristiques. Par oxydation anodique, le métal ou alliage est redissous en ions métalliques, reconstituant ainsi l'aspect initial du milieu. En tant qu'électrolyte, il possède une conductivité ionique élevée due à sa nature de solution aqueuse très concentrée, conductivité qu'il conserve en permanence même sans scellement rigoureusement étanche dans un mode préféré de réalisation. En tant que couple redox auxiliaire, il permet que s'effectue réversiblement à la contre-électrode une réaction électrochimique conjuguée de celle qui se produit au même moment à l'électrode de travail.

Un tel matériau selon l'invention est constitué au moins par un mélange homogène de consistance solide comprenant un mélange d'au moins:
a) un sel hydrosoluble ou un mélange hydrosoluble de sels d'au moins un métal qui peut être réversiblement déposé cathodiquement et oxydé anodiquement à partir d'une solution aqueuse d'un de ses ions simples ou complexes;
b) un sel ou un mélange hydrosoluble de sels d'au moins un métal ou cation non électrodéposable à partir d'une solution aqueuse;
c) au moins une résine polymère filmogène primitivement hydrosoluble; et
d) de l'eau;

ledit matériau possédant une électroconductivité ionique, et en outre comprenant un couple redox auxiliaire réversible;
ledit matériau étant capable, réversiblement:
a) de développer par réduction cathodique d'au moins un ion métallique électrodéposable présent dans le matériau, un dépôt de métal ou d'alliage métallique;
b) de dissoudre par oxydation anodique le dépôt de métal ou d'alliage métallique et de réincorporer dans leur état originel l'ion ou les ions métalliques produits par cette oxydation;
c) de développer par oxydation anodique la forme oxydée du couple redox auxiliaire;
d) de développer par réduction cathodique la forme réduite du couple redox auxiliaire;

les proportions des sels hydrosolubles étant sélectionnés pour que la proportion pondérale du sel ou mélange de sels d'au moins un métal ou cation non électrodéposable soit au moins égale à celle du sel ou mélange de sels d'au moins un métal qui peut être réversiblement déposé cathodiquement et oxydé anodiquement à partir d'une solution aqueuse d'un de ses ions simples ou complexes;
caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

Selon une seconde variante préférée de l'invention, un tel matériau est tel que, en combinaison: (1) il est constitué par un mélange homogène, de consistance solide, comportant les constituants suivants: (a) un sel hydrosoluble de sels d'au moins un métal cathodiquement déposable à partir d'une solution aqueuse d'un de ses ions simples ou complexes; (b) au moins une résine polymère filmogène primitivement hydrosoluble; (c) de l'eau; (d) un couple redox auxiliaire; (2) il est conformable en couche continue d'une épaisseur comprise entre notamment quelques microns et plusieurs dizaines de microns; le matériau étant capable de, réversiblement, (1) développer des dépôts de métal ou d'alliage par réduction cathodique d'au moins un ion métallique déposable présent dans le matériau, et (2) effacer, par oxydation anodique, les dépôts et réincorporer dans l'état d'origine l'ion ou les ions métalliques produits par cette oxydation, caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration notamment en vue de réaliser des dispositifs d'affichage comportant une ou différentes couleurs.

Le ou lesdits matériaux peuvent comprendre, en outre en tant que de besoin et non limitativement: au moins un couple redox additionnel; au moins un solide sous forme particulaire dispersée notamment un pigment contrastant et/ou masquant au moins un agent colorant; au moins un acide; au moins un agent de réticulation; au moins un agent complexant; au moins un additif dissous ou dispersé, susceptible d'améliorer les propriétés et l'utilisation du matériau; au moins un agent de formation et/ou d'application en couche ou pellicule du matériau.

Selon une variante de réalisation de couches ou pellicules du matériau, celles-ci peuvent être divisées en au moins deux couches superposées ou imbriquées contenant chacune un pourcentage différent de chaque constituant de l'ensemble.

Selon une autre variante de réalisation, on peut constituer une couche ou pellicule de matériau composite selon l'invention par superposition ou imbrication d'au moins deux matériaux différents. Par exemple, il peut être avantageux de constituer une couche composite comportant une pellicule non adhésive mais mécaniquement très solide, constituée par exemple avec une résine telle que de la carboxyméthylcellulose de sodium réticulée dans la pellicule, et une ou deux couches externes moins solides mécaniquement mais adhésives par contact, constituées par exemple avec de la polyvinylpyrrolidone ou de l'hydroxyéthylcellulose.

Selon une autre variante, le matériau est constitué par au moins deux matériaux, chacun tel que défini précédemment.

Les métaux utilisables ont été déjà mentionnés. On peut utiliser, selon le cas, un métal seul ou plusieurs métaux pris parmi les métaux cathodiquement déposables à partir d'une solution aqueuse et les métaux qui ne se déposent pas ou mal individuellement, mais co-déposent avec certains des métaux précédents: tungstène, molybdène, notamment.

Les sels métalliques utilisables sont des composés ioniques où le métal est présent sous forme de cation ou incorporé à un complexe cationique, les anions de ces composés et d'autres conditions, notamment de pH, étant choisis tels que les composés soient substantiellement complètement solubles dans un milieu aqueux. Des anions convenables peuvent être trouvés par exemple parmi les suivants: chlorure, nitrate, sulfate, borate, fluorure, iodure, bromure, fluoborate, fluosilicate, fluogallate, dihydrogenophosphate, chlorate, perchlorate, bromate, sélénate, thiosulfate, thiocyanate, formiate, acétate, butyrate, hexanoate, adipate, citrate, lactate, oléate, oxalate, propionate, salicylate, glycinate, glycocollate, glycérophosphate, tartrate, acétylacétonate, isopropylate, benzoate, malate, benzène sulfonate, 1-phénol-4-sulfonate, notamment.

On trouve particulièrement avantageuse la présence d'anions halogénure (chlorure, bromure, iodure, fluorure) dans le matériau amélioré, lorsqu'une telle présence est compatible avec les autres constituants du matériau et les propriétés attendues. On trouve, en effet, que la présence d'anions halogénure est souvent avantageuse en ce qui concerne notamment la déliquescence, la fonction de couple redox auxiliaire, la solubilité des ions métalliques, la facilité d'électrodéposition et la redissolution du métal ou alliage métallique et la réversibilité du processus écriture-effacement.

Selon l'invention, on trouve qu'on maximise les propriétés précédentes et qu'on obtient de manière surprenante des caractéristiques nouvelles inattendues avantageuses du matériau et de la cellule de modulation de la lumière qui l'emploie en donnant dans le matériau une proportion substantiellement exclusive à des anions halogénure, spécialement lorsque le rapport du poids de l'ensemble des sels hydrosolubles à celui de l'eau contenue dans le matériau amélioré est élevé, préférentiellement supérieur à 0,5 et plus préférentiellement encore supérieur à 1.

En ce qui concerne la préparation de matériaux contenant un sel ou mélange de sels hygroscopiques et préférentiellement déliquescents, la plupart des métaux ont certains de leurs sels hygroscopiques ou déliquescents, le plus souvent des halogénures, des nitrates, des perchlorates, des chlorates, des thiocyanates, notamment.

Un mélange déliquescent de sels est généralement obtenu à partir de sels individuellement déliquescents, mais des mélanges peuvent être déliquescents sans que tous leurs constituants le soient, et ils peuvent être plus déliquescents, c'est-à-dire cristalliser à une certaine humidité relative plus basse que le plus déliquescent d'entre eux.

L'emploi dans le matériau d'une association de sels de plusieurs métaux déposables offre des possibilités plus étendues que l'emploi d'un métal unique. Tout d'abord, certains sels métalliques qui ne sont pas ou sont difficilement utilisables seuls en concentration relative élevée le deviennent dans un mélange en faible proportion avec d'autres où leurs limitations spécifiques (par exemple solubilité, coloration, etc...) deviennent acceptables ou inapparentes. On peut aussi changer dans certains cas les conditions dans lesquelles se dépose un cation électrodéposable et/ou modifier les particularités d'écriture et d'effacement et/ou d'aspect par la présence d'autres cations. Enfin, par association de plusieurs ions métalliques différents, on peut obtenir, par réduction cathodique, le dépôt d'au moins deux métaux en un alliage dont les propriétés, l'aspect, la densité optique, le reflet peuvent être complètement différents de ceux des métaux individuels. On peut aussi obtenir des particularités de l'écriture et de l'effacement nouvelles et multiples, notamment en ce qui concerne la mémoire (c'est-à-dire la persistance du point-image ou segment d'image écrit après suppression de la tension d'écriture), l'existence et la valeur d'un seuil de tension, c'est-à-dire d'une tension minimale d'écriture, et plus généralement des caractéristiques non linéaires diverses particulièrement intéressantes pour l'adressage matriciel sans perte de contraste ni diaphotie de dispositifs d'affichage comportant un grand nombre de points-image.

La présence, dans le matériau, en association avec d'autres ions métalliques, d'ions cuivre même en très faible concentration relative, est particulièrement avantageuse, notamment en ce qui concerne la facilité d'électrodéposition et de redissolution, la réversibilité du processus écriture-effacement, l'aspect du dépôt et la durée de vie, c'est-à-dire la réversibilité des processus. On a trouvé de manière surprenante que l'effet sur la durée de vie, notamment sur le nombre de cycles écriture-effacement, se trouve encore multiplié en donnant, selon l'invention, aux anions halogénures une proportion substantiellement exclusive par rapport à l'ensemble des anions et au rapport pondéral de l'ensemble des sels hydrosolubles à l'eau contenue une valeur élevée. Cette multiplication pourrait résulter de la solubilisation du cuivre (I). Toutefois, l'invention n'est pas liée à cette hypothèse. Un rapport élevé des sels hydrosolubles (anhydres) à l'eau contenue dans le matériau amélioré, préférentiellement supérieure à 0,5 et plus préférentiellement encore supérieur à 1 a un effet favorable sur l'ensemble des caractéristiques électro-optiques de la cellule.

Les résines polymères filmogènes primitivement hydrosolubles utilisables, comprennent des résines capables de former des solutions aqueuses vraies et également des résines capables de former une dispersion colloïdale dans l'eau. On peut citer à titre d'exemples non limitatifs et purement indicatifs des polymères tels que le polyoxyéthylène, la polyvinylpyrrolidone, l'alcool polyvinylique, les éthers cellulosiques tels que, par exemple, l'hydroxyéthylcellulose et la carboxyméthylcellulose, l'alginate de sodium, la gélatine, la gomme arabique, le polyacrylamide, la gomme adragante, le guaranate, le polyéthylène glycol, l'amidon et ses dérivés, les polymères à groupements fonctionnels basiques notamment ammonium quaternaires notamment les polyvinylpyridines, la polyvinylamine, les polymères à groupements fonctionnels basiques, notamment carboxyliques, notamment la carboxymétylcellulose de sodium, les acides polyacrylique et polyméthacrylique et leurs dérivés, notamment sulfoniques notamment les acides polystyrènes sulfonique et polyéthylène sulfonique et leurs dérivés, notamment. Des effets intéressants peuvent être obtenus par l'interaction de ces groupements fonctionnels basiques et acides avec les anions et cations des sels hydrosolubles. Plusieurs résines compatibles entre elles, c'est-à-dire ne coprécipitant pas, peuvent être utilisées en mélange. Des résines à poids moléculaire élevé, notamment compris entre 10 000 et 10 000 000, sont préférés pour la constitution de matériaux améliorés à consistance solide. Des résines à bas poids moléculaire sont en général préférées pour la constitution de matériaux à consistance fluide. La résine polymère, outre ses fonctions dans la couche de matériau électrolytique, confère au matériau ou à une composition fluide formatrice une viscosité qui facilite l'application, en couches minces, viscosité qu'on peut ajuster de diverses manières. En particulier, on peut employer des résines polymères qui confèrent au matériau de consistance solide, des propriétés d'adhésion de contact (toucher collant ou collant de contact), telles que, par exemple, de manière non limitative et purement indicative, l'hydroxyéthylcellulose, l'alcool polyvinylique, la polyvinylpyrrolidone, notamment, soit pour constituer une couche ou pellicule unique, soit pour constituer au moins une couche externe d'une pellicule composite.

L'eau est en quantité telle que d'une part le matériau électrolytique conserve sa consistance solide en l'absence de contraintes extérieures, d'autre part son rapport aux sels hydrosolubles soit ainsi qu'il a été indiqué précédemment.

Les cations de métaux non électrodéposables à partir d'une solution aqueuse peuvent être pris de façon non limitative et purement indicative parmi les alcalins, les alcalino-terreux, l'aluminium, le béryllium, la plupart des terres rares et, d'une manière générale, les cations des métaux très réducteurs non électrodéposables en solution aqueuse. Ils comprennent également les cations non réductibles en un métal, tels que par exemple l'ion ammonium, les ions ammonium quaternaires, notamment. Les sels hydrosolubles de ces cations doivent être entendus comme hydrosolubles en présence des autres sels hydrosolubles du matériau, c'est-à-dire choisis tels que le mélange de la totalité des sels présents dans le matériau soit hydrosoluble. On trouve particulièrement avantageux les alcalins et préférentiellement le lithium.

Un ou plusieurs solides peuvent être dispersés de manière homogène dans le matériau sous forme particulaire pour notamment améliorer ou modifier les propriétés mécaniques, l'aspect du point-image ou segment d'image écrit, la diffusion et la réflexion de la lumière. En particulier, un tel solide est un pigment masquant et/ou contrastant ayant pour fonctions de: masquer la contre-électrode si celle-ci ne constitue pas un fond de couleur et/ou de contraste satisfaisant et constituer un fond offrant le contraste le plus souhaitable avec l'aspect noir ou spéculaire du point-image ou segment d'image écrit (par exemple, masquer l'aspect noir d'une contre-électrode contenant du carbone et lui substituer un fond contrastant le plus souvent blanc pour un point-image noir); atténuer une possible teinte colorée parasite du matériau en la noyant.

De nombreux pigments minéraux et organiques blancs et colorés sont utilisables sous réserve de leur absence d'interaction chimique avec les autres constituants du matériau. Un pigment blanc remarquablement stable dans la plupart des milieux électrolytiques selon l'invention et possédant un très grand pouvoir couvrant ainsi qu'un indice de blancheur élevé est le dioxyde de titane, principalement sous les formes cristallines rutile et anatase. Le pigment peut être utilisé en coopération avec un pigment coloré, soit en mélange, soit en superposition dans une couche composite de matériau, ce qui permet de modifier la saturation de la couleur et/ou de bénéficier pour un fond coloré du pouvoir couvrant élevé du dioxyde de titane. De tels pigments colorés sont, par exemple, le chromate de zinc, le minium, le bleu de cobalt, l'oxyde de chrome, notamment. On peut, de même, associer le dioxyde de titane et un colorant soluble. Un pigment noir stable est le carbone, notamment sous forme de noir de carbone.

Suivant la nature du pigment, sa granulométrie, sa couleur, son pouvoir couvrant et l'effet désiré, le taux de pigment dispersé dans le matériau peut varier dans de larges limites, de préférence entre 0,1 et 50 parties en poids de pigment pour une partie de résine polymère filmogène.

Comme déjà indiqué, le matériau peut comporter, si nécessaire, un ou des couples redox auxiliaires additionnels dont la forme réduite est d'une part hydrosoluble en présence des autres constituants hydrosolubles du matériau, et d'autre part, incolore ou peu colorée aux concentrations utilisées, ayant notamment pour fonctions de modifier le seuil de tension d'écriture, d'améliorer la réversibilité du processus d'écriture-effacement et d'augmenter le nombre de cycles possibles. On peut utiliser par exemple des espèces métalliques présentant deux degrés d'oxydation dont la forme réduite est soluble ou solubilisable, selon l'invention, par exemple par complexation par des anions halogénures.

Le matériau peut comporter en outre un acide en quantité suffisante pour maintenir le pH à une valeur convenable et empêcher l'hydrolyse et/ou la précipitation des espèces métalliques présentes et/ou la gélification ou la synérèse ou la floculation de la résine dans le matériau. On peut utiliser par exemple de manière non limitative et purement indicative l'acide chlorhydrique, l'acide bromhydrique, l'acide acétique, l'acide perchlorique, l'acide chlorique, l'acide formique, l'acide nitrique, ou équivalent.

Le matériau de consistance solide peut comporter, en outre, un agent de réticulation de la résine polymère, en vue de renforcer ses qualités mécaniques, notamment la dureté et la cohésion, de la couche de matériau amélioré. On peut utiliser à cet effet les agents de réticulation habituels des résines polymères, tels que des composés et résines polyfonctionnels, par exemple le glyoxal, la diméthylolurée, un composé époxy, un carbodiimide, un isoxazole, l'amidon dialdéhyde, notamment. On peut aussi, dans le cas de résines possédant par exemple des groupes carboxyliques, comme la carboxyméthylcellulose de sodium, utiliser des cations polyvalents comme Zr (IV), Sn (IV), Al (III), notamment. Dans le cas par exemple de Al (III), le poids de cation peut varier préférentiellement entre 0,01 et 0,5 partie pour une partie de résine. Avec de nombreux ions métalliques polyvalents électrodéposables utilisables selon l'invention, la réticulation peut être obtenue spontanément sans qu'il soit nécessaire de rajouter un agent réticulant supplémentaire. Les conditions de mise en oeuvre de l'agent de réticulation sont choisies de manière telle que la réticulation soit effectuée après constitution et application de la couche de matériau.

Par exemple, avec un cation polyvalent, une concentration suffisamment faible associée à la présence d'un acide volatil empêche la réticulation notable tant que l'acide n'a pas été éliminé par évaporation. La réticulation de la résine réduit la capacité d'adhésion par contact de la couche de matériau électrolytique selon une structure préférée de la couche de matériau, on associe une couche réticulée, mécaniquement solide et cohérente, mais non adhésive, à une ou deux couches externes moins solides mais adhésives constituées avec une résine adéquate non réticulée.

Le matériau peut comporter, en outre, un agent complexant (tel que, par exemple, l'acide tartrique, l'acide citrique, l'anion oxalate, notamment), qui peut aider à solubiliser certains sels métalliques et/ou faciliter le co-dépôt de plusieurs ions en un alliage métallique.

Le matériau peut comporter, en outre, un ou plusieurs composés, substances, constituants dissous ou dispersés susceptibles d'améliorer la stabilité du matériau amélioré et/ou ses propriétés optiques, mécaniques, électriques et/ou l'aspect et/ou d'autres caractéristiques du point-image ou segment d'image, la réversibilité du processus écriture-effacement, la durée de vie notamment, le nombre de cycles accessibles sans dégradation, les vitesses d'écriture et d'effacement, la mémoire, le seuil de tension électrique d'écriture et les caractéristiques électro-optiques, et notamment l'aspect du point-image.

Le matériau peut comporter, en outre, un ou plusieurs agents d'application en couche de faible épaisseur du matériau amélioré, tels que, par exemple, des agents tensioactifs, des substances plastifiantes, notamment.

Le matériau peut éventuellement contenir des résidus d'agents de préparation, d'application ou de conservation propres à un mode particulier de fabrication ou d'application en couche ou pellicule du matériau ou d'une composition formatrice du matériau.

Un procédé particulier préféré, de fabrication du matériau de consistance solide et de sa mise en oeuvre en couches ou pellicules de faible épaisseur dans des cellules élémentaires de modulation de la lumière, mais non limitatif, comporte la constitution d'une composition formatrice fluide comprenant au moins les constituants du matériau et un supplément d'eau, cette dernière en quantité telle que la composition formatrice fluide présente une fluidité convenable pour l'application ou formation en couche sur au moins une des électrodes d'une cellule élémentaire de modulation de la lumière et le traitement -notamment séchage, traitement thermique- éventuel jusqu'à l'obtention de la consistance solide.

Selon une variante de ce procédé, il comporte au moins l'étape consistant à disperser le ou les pigments interférentiels dans la composition formatrice fluide constituée.

Par composition formatrice fluide, on entend une composition présentant, spontanément ou sous l'effet de contraintes extérieures appliquées, telles que celles nécessaires à son application en couche, les propriétés d'un matériau fluide, susceptible de constituer le matériau dans sa consistance solide spontanément par interruption des contraintes extérieures, par évaporation d'un excès d'eau et/ou de substances volatiles ou encore par induction d'une consistance solide par des moyens et traitements divers. La composition formatrice fluide comprend aussi le matériau dans sa composition finale tant qu'il reste déformable sans rupture de manière continue en présence de contraintes extérieures appliquées.

Une composition formatrice fluide du matériau est obtenue par dissolution des constituants hydrosolubles et dispersion des constituants non solubles dans de l'eau, suivies éventuellement de l'évaporation d'une partie de cette eau ou, au contraire, de la dilution par un ajout d'eau jusqu'à l'obtention de la viscosité convenable. La composition formatrice peut contenir aussi des substances destinées à faciliter son application ou formation en couche, telles que par exemple des agents tensioactifs, des substances plastifiantes. Elle peut contenir aussi des substances destinées à maintenir la stabilité de la composition formatrice et/ou permettre sa déformabilité continue, c'est-à-dire sans rupture: par exemple, en présence d'un agent de réticulation destiné à réticuler la résine dans la couche de matériau, la composition formatrice fluide peut contenir des agents retardateurs de la réticulation, tels que par exemple de manière non limitative des complexants, notamment; elle peut contenir, pour empêcher l'hydrolyse de sels solubles en cas de dilution poussée, par exemple des acides, en particulier des acides volatiles. De telles substances peuvent être éliminées partiellement ou totalement de la couche de matériau, par exemple par évaporation si elles sont volatiles, ou au contraire subsister dans la couche dudit matériau.

Une caractéristique remarquable de ce mode possible de fabrication du matériau est de permettre d'ajuster de façon commode la viscosité de la composition formatrice entre des limites extrêmes, allant de celle d'un liquide proche de l'eau à celle d'une pâte solide en l'absence de contraintes extérieures. On peut ainsi ajuster la viscosité à une valeur convenable pour le mode choisi d'application ou formation en couche de faible épaisseur, qu'on peut prendre parmi les techniques connues en elles-mêmes d'application ou formation en couches, telles que par exemple: sérigraphie, lame d'air, barreau à fil (connue sous le nom de "coating bar"), raclette, extrusion, trempé, notamment, plus généralement l'ensemble des techniques dites de "films épais".

La composition formatrice est appliquée en couche d'épaisseur préférentiellement comprise entre quelques microns et plusieurs centaines de microns en fonction notamment de sa teneur en eau, de façon à obtenir une couche de matériau d'épaisseur préférentiellement comprise entre quelques microns et plusieurs dizaines de microns, jusqu'à environ une centaine, sur l'une au moins des électrodes de la cellule élémentaire de modulation de la lumière. Elle est éventuellement séchée (par air chaud, infrarouges, exposition à l'atmosphère ambiante, notamment), jusqu'à l'obtention du matériau de consistance solide dans sa composition finale. Elle peut aussi faire l'objet, éventuellement d'un traitement additionnel, par exemple un traitement thermique, par exemple pour obtenir ou accélérer la réticulation de la résine.

La couche de matériau peut être mise en oeuvre dans la cellule élémentaire de modulation de la lumière par application ou formation de cette couche au contact d'une des électrodes, suivie de l'application de l'autre électrode au contact de la face libre de la couche. Avec le mode préféré de réalisation du matériau qui lui procure un toucher collant ou collant de contact ou superficiel, la cohésion de la cellule est assurée par la simple adhérence de la couche de matériau à chacune des deux électrodes.

En plus de l'adhésion procurée par le collant de surface ou de contact du matériau et même en son absence, la formation directe du matériau en couche sur un substrat tel qu'une des électrodes à partir d'une composition formatrice fluide enduite puis séchée peut procurer une adhérence naturelle à ce substrat qui peut être beaucoup plus forte que celle d'une couche de matériau qu'on forme d'abord indépendamment et qu'on fait adhérer ensuite.

La composition formatrice fluide peut être enduite ou appliquée sur une électrode en une seule couche ou en plusieurs couches consécutives avec séchages intermédiaires ou simultanés. Les différentes couches peuvent être identiques entre elles, mais on peut aussi constituer chaque couche avec un pourcentage différent des constituants totaux, l'ensemble les contenant tous. On peut aussi appliquer des couches de matériau consécutives de compositions différentes. On obtient ainsi une couche de matériau de structure composite. Par exemple, on peut constituer une couche inférieure, c'est-à-dire appliquée directement sur le substrat avec une résine hydrosoluble facilement réticulable telle que, par exemple, la carboxyméthylcellulose de sodium (et un agent de réticulation) et la couche supérieure avec une résine procurant un toucher collant ou collant de contact telle que, par exemple, l'hydroxyéthylcellulose, la polyvinylpyrrolidone, l'alcool polyvinylique, etc... La couche composite de matériau ainsi formée adhère à l'électrode sur laquelle on l'a formée, présente une solidité élevée et présente un collant de contact qui permet, dans un mode possible de construction de la cellule élémentaire de modulation de constituer cette dernière en appliquant la seconde électrode sur la surface libre collante de la couche composite à laquelle elle adhère.

On peut aussi appliquer une première couche (simple ou composite) de matériau sur une des électrodes et une seconde couche (simple ou composite) sur la seconde électrode, et constituer la cellule élémentaire par la réunion des deux couches en une couche composite unique en mettant en contact les deux couches par leur face libre. Avec au moins une des deux couches composées selon le mode qui lui procure un toucher collant ou collant de contact, la cohésion de la cellule est assurée par la seule adhérence des couches de matériaux aux électrodes et entre elles.

On peut aussi, au lieu de constituer des couches continues avec le matériau, diviser celui-ci en grains ou particules et constituer les couches par juxtaposition de tels grains seuls ou maintenus, par exemple par le moyen d'un liant.

Dans un dispositif autonome principalement d'affichage, comportant une multiplicité de points-image et/ou segments d'image, la couche de matériau peut, dans certaines constructions être commune à toutes les cellules élémentaires et occuper la totalité de la surface d'écran. Dans d'autres constructions du dispositif, elle peut être distribuée selon une configuration superficielle de portions de couche, c'est-à-dire fractionnée en portions de couche ou couches d'aire réduite indépendantes et réparties sur l'écran, propres chacune à une cellule élémentaire ou encore propres chacune à un groupe restreint particulier de cellules élémentaires (par exemple commune aux cellules d'une même ligne ou d'une même colonne dans un dispositif d'affichage matriciel). L'obtention de telles configurations avec de hautes résolutions est particulièrement aisée avec le présent mode de fabrication de couches de matériau, en particulier grâce aux techniques de masques, stencils, écrans de soie, notamment utilisés dans des procédés de dépôt dits de "films épais".

Il est également possible, dans une variante du procédé, de constituer la couche de matériau sur un substrat provisoire, constitué d'un matériau anti-adhérent tel que le polytétrafluoréthylène, puis de la transférer sur l'une ou l'autre des deux électrodes.

Une cellule de modulation de la lumière comporte, au moins, en combinaison:
1. Une première électrode (électrode de travail) transparente ou substantiellement transparente, et électroniquement conductrice.
2. Une seconde électrode (contre-électrode) écartée transversalement de l'électrode de travail et électroniquement conductrice.
3. Au moins une couche (ou portion de couche) du matériau décrit précédemment interposée entre les deux électrodes et en contact avec elles dans la région d'un point-image ou d'un segment d'image.
4. Des zones d'amenée du courant électrique sur l'électrode de travail et la contre-électrode, aptes notamment à permettre d'une part d'appliquer à l'électrode de travail une tension électrique négative par rapport à celle de la contre-électrode, et, d'autre part, de faire passer entre les électrodes un courant dont le sens est opposé à celui du courant électrique résultant de l'application de la tension précédente.

Selon une autre variante préférée de l'invention, une cellule de modulation de la lumière, caractérisée en ce qu'elle comporte, au moins, en combinaison:
1. Une première électrode (électrode de travail), transparente ou substantiellement transparente et électroniquement conductrice.
2. Une seconde électrode (contre-électrode), écartée transversalement de l'électrode de travail et électroniquement conductrice.
3. Au moins une couche (ou portion de couche) de matériau selon l'invention au contact de la seconde électrode (contre-électrode).
4. Au moins une couche de matériau, au contact de la première électrode (électrode de travail), comportant, au moins, en combinaison:
   (a) un sel hydrosoluble de sels d'au moins un métal cathodiquement déposable à partir d'une solution aqueuse d'un de ses ions simples ou complexes;
   (b) au moins une résine polymère filmogène primitivement hydrosoluble.
   (c) de l'eau;
   (d) un couple redox auxiliaire.
5. Des zones d'amenée du courant électrique sur l'électrode de travail et sur la contre-électrode, aptes notamment à permettre d'une part d'appliquer à l'électrode de travail une tension électrique négative par rapport à celle de la contre-électrode et, d'autre part, de faire passer entre les électrodes un courant dont le sens est opposé à celui du courant électrique résultant de l'application de la tension précédente.

Cette cellule permettant l'écriture d'au moins un point-image ou segment d'image, le maintien dans l'état écrit d'un tel point-image ou segment d'image, réversiblement, l'effacement d'un tel point-image ou segment d'image, et le maintien dans l'état effacé de ce point-image ou segment d'image, l'écriture d'un point-image ou segment d'image étant défini comme l'accroissement de coloration ou de densité optique dans la région de l'interface entre l'électrode de travail et la couche ou portion de couche de matériau et l'effacement d'un point-image ou segment d'image étant défini comme la diminution ou la disparition de l'accroissement de coloration ou de densité optique obtenu lors de l'écriture.

Un dispositif élémentaire de modulation de la lumière comprend au moins:
- une première électrode (électrode de travail) transparente ou substantiellement transparente, et électroniquement conductrice, éventuellement portée par un premier substrat, ou substrat frontal, transparent;
- une seconde électrode (contre-électrode) ou électrode auxiliaire écartée transversalement de l'électrode de travail et électroniquement conductrice, transparente ou substantiellement transparente si le dispositif élémentaire est destiné à fonctionner par transmission, sans exigence de transparence si le dispositif élémentaire n'est destiné à fonctionner que par réflexion, éventuellement portée par un second substrat, transparent si le dispositif élémentaire est destiné à fonctionner par transmission;
- au moins une couche (ou portion de couche) de matériau tel que décrit précédemment interposée entre les deux électrodes et en contact avec elles dans la région d'un point-image ou d'un segment d'image;
- des zones d'amenée du courant électrique sur les électrodes (c'est-à-dire une cellule de modulation); et
- des amenées de courant électrique au contact des zones d'amenée du courant électrique;
- des connexions électriques prolongeant les amenées de courant;
- au moins un substrat mécanique, porteur de ce dispositif.

Un dispositif élémentaire peut comporter, en outre, des moyens de contraste et/ou de masquage de la périphérie de la zone optiquement colorable (point-image ou segment d'image), si ces moyens ne sont pas déjà intrinsèquement créés par les composants du dispositif élémentaire. Il peut comporter, également, des moyens d'isolation et de protection des composants vis-à-vis de l'atmosphère ambiante et/ou des moyens de maintien de la cohésion du dispositif et/ou de la permanence des contacts électriques internes.

Un dispositif autonome de modulation de lumière comporte au moins un tel dispositif élémentaire et généralement une pluralité (notamment dans le cas d'un dispositif d'affichage) et en outre la prolongation jusqu'à un ou plusieurs connecteurs ou une ou plusieurs zones de connexion électriques des dispositifs élémentaires et des moyens mécaniques porteurs conférant au dispositif une rigidité structurelle, le tout permettant d'utiliser ce dispositif comme une unité autonome. Les composants complémentaires du dispositif autonome sont notamment: support ou substrats mécaniques, boîtier, encapsulation, connexions internes, connecteur(s) ou zone(s) de connexion, circuit imprimé, ainsi qu'on l'a déjà décrit. Dans le cas particulier d'un dispositif autonome comportant une pluralité ou multiplicité de dispositifs élémentaires, les composants ou constituants extrinsèques des différents dispositifs élémentaires peuvent être confondus et/ou combinés.

Dans le cas d'une pluralité de dispositifs élémentaires, au moins deux cellules de modulation de la lumière desdits dispositifs comportent des pigments interférentiels identiques ou différents et ont donc une coloration identique ou différente.

Un tel dispositif autonome de modulation de la lumière, en particulier d'affichage, utilisant un matériau de consistance solide, ne comprend que des matériaux solides.

Il présente une simplicité remarquable de structure et de construction avec des exigences réduites vis-à-vis des matériaux constitutifs et composants et une très grande tolérance vis-à-vis des contraintes extérieures, ce qui permet la construction simple et bon marché de dispositifs de modulation de la lumière, et, notamment de dispositifs d'affichage les plus divers, à adressage direct ou matriciel, et en particulier la réalisation de très grands panneaux d'affichage (tels que, par exemple, pour des stades, des aéroports, etc...).

En effet, il n'est pas nécessaire de maintenir entre l'électrode et la contre-électrode d'une cellule élémentaire d'affichage un parallélisme rigoureux et un écartement précis, ni par conséquent nécessaire de prévoir un espaceur spécifique; une couche de matériau telle que déposée par des techniques industrielles connues d'enduction ou d'application suffit à constituer l'espaceur et à définir un écartement de précision et de parallélisme suffisants.

Il n'est pas non plus nécessaire d'utiliser une électrode de travail et une contre-électrode d'une planéité sans défauts: la déformabilité ou complaisance plastique ou viscoélastique du matériau électrolytique de consistance solide lui permet d'épouser une courbure générale, si elle existe, ainsi que des défauts locaux, et d'assurer l'excellent contact physique et électrique nécessaire au fonctionnement. C'est ainsi, par exemple, que des électrodes transparentes déposées sur une plaque de verre étiré ordinaire, conviennent à la réalisation de dispositifs d'affichage.

Il n'est pas non plus nécessaire, avec le mode de réalisation du matériau selon l'invention qui lui procure un toucher collant ou collant de contact, de prévoir des moyens mécaniques spécifiques pour maintenir la cohésion de la cellule élémentaire d'affichage, ni des moyens mécaniques pour appliquer et maintenir une pression sur la cellule en vue d'assurer et de conserver l'excellent contact physique et électrique nécessaire à chaque interface conducteur électronique-conducteur ionique pour un bon fonctionnement: l'adhérence de la couche de matériau à chaque électrode suffit à maintenir la cohésion de la cellule élémentaire et la qualité et la permanence du contact électrique.

Enfin, avec le mode de réalisation du matériau qui lui maintient une conductivité permanente même en contact avec l'atmosphère ambiante, il n'est pas nécessaire de prévoir des moyens de scellement rigoureusement étanches de la cellule élémentaire ou dispositif destinés à interdire complètement l'entrée d'air et/ou d'humidité atmosphérique et la sortie d'humidité contenue dans la couche de matériau; une isolation protectrice du dispositif est souhaitable en général ou même nécessaire en cas de fonctionnement dans des ambiances atmosphériques extrêmes, corrosives ou agressives, pour limiter ou empêcher les contaminants et agents de corrosion éventuels présents dans le milieu extérieur d'accéder aux composants du dispositif y compris à ceux extérieurs aux cellules tels que par exemple, les conducteurs de connexion et de raccordement, mais généralement sans avoir à aller aux contraintes d'un scellement rigoureusement étanche de chaque cellule.

En ce qui concerne les dispositifs tels que les panneaux d'affichage de très grande surface, on sait que ceux-ci peuvent se trouver naturellement soumis à un ensemble de contraintes capables d'affecter leur intégrité physique et leur bon fonctionnement: en raison de cette grande taille, des dilatations thermiques différentielles (telles que résultant par exemple de l'exposition unilatérale ou partielle au soleil ou de la proximité asymétrique d'une source de chaleur), des flexions (telles que résultant par exemple de l'effet du vent ou de contraintes mécaniques imposées par l'architecture de soutien ou d'encadrement), des vibrations (induites par exemple par la circulation de véhicules ou par des chocs), etc..., entraînent des contraintes et déformations locales qui peuvent être considérables, et qui sont susceptibles d'altérer l'intégrité physique des cellules de modulation, de dégrader la qualité du contact électrique aux interfaces et d'altérer l'étanchéité des scellements indispensables dans les dispositifs d'affichage de l'art antérieur, en particulier dans les dispositifs électrochromiques de l'art antérieur. En revanche, dans les dispositifs selon l'invention, la combinaison des propriétés de déformabilité plastique ou viscoélastique, de collant de contact du matériau de consistance solide et d'absence de nécessité de scellement rigoureusement étanche, permet aux grands panneaux de ne pas être affectés dans leur intégrité ni dans leur fonctionnement par les contraintes thermiques et mécaniques mentionnées.

On décrit maintenant plus en détail un tel dispositif ainsi généralement décrit.

L'électrode de travail est constituée d'un matériau présentant à la fois des propriétés de conduction électronique et de substantielle transparence optique, tel que par exemple, une couche mince, généralement de quelques dizaines à quelques milliers d'Angströms d'épaisseur, d'or, d'oxyde d'étain ("TO"), d'oxyde d'indium, d'oxyde mixte d'étain et d'indium ("ITO"), ou équivalent, cette liste n'étant pas limitative et seulement indicative. Une telle couche est généralement déposée sur un substrat transparent tel qu'une plaque de verre ou une feuille de matière plastique qui peut constituer alors un substrat frontal du dispositif élémentaire, et peut même constituer un substrat frontal unique de l'ensemble des électrodes de travail individuelles d'un dispositif autonome lorsque celui-ci comprend une multiplicité de points-image et/ou segments d'image. Dans ce cas, les électrodes de travail individuelles sont constituées par une configuration de portions de couche mince conductrice transparente déposées sur un tel substrat frontal unique ou sont configurées par attaque sélective d'une couche unique. Le verre "NESA" de PPG INDUSTRIES, constitué d'une couche mince d'oxyde d'étain déposée sur une plaque de verre, est un exemple d'électrode transparente et de substrat utilisables dans l'invention.

La contre-électrode est constituée comme l'électrode de travail d'un matériau conducteur et transparent si le dispositif de modulation de la lumière est destiné à fonctionner par transmission ou transparence. S'il s'agit d'une couche mince déposée sur un substrat transparent de verre ou de matière plastique, ce dernier peut constituer un substrat dorsal unique de l'ensemble des contre-électrodes d'un dispositif de modulation lorsque celui-ci comprend une multiplicité de points-image et/ou segments d'image. Dans ce cas, de la même manière que les électrodes de travail individuelles, les contre-électrodes individuelles sont constituées par une configuration de portions de couche mince conductrice transparente déposées sur un tel substrat dorsal unique ou sont configurées par attaque sélective d'une couche unique. Cependant, si le dispositif de modulation comprend déjà un substrat frontal unique susceptible de former un support mécanique pour le dispositif, il peut être avantageux, notamment pour ne pas introduire une éventuelle rigidité additionnelle, d'avoir des contre-électrodes mécaniquement indépendantes les unes des autres et par conséquent, de ne pas constituer de substrat dorsal unique.

La contre-électrode n'a pas besoin d'être transparente si le dispositif de modulation de la lumière est destiné à fonctionner par réflexion. Il lui suffit alors de présenter des propriétés de conduction électronique. Un très grand nombre de matériaux homogènes ou composites présentant une conduction électronique sont susceptibles de convenir. On utilise avantageusement des matériaux de contre-électrode se présentant sous forme de feuilles et de couches de faible épaisseur, et préférentiellement présentant sous cette forme une certaine souplesse ou déformabilité.

On entend par matériau de contre-électrode, un matériau, homogène ou composite, à partir duquel il est possible de constituer une configuration superficielle de contre-électrodes. Un tel matériau peut être par exemple une feuille souple de graphite pyrrolitique, une matière plastique chargée de particules de carbone ou de métal, une pâte conductrice pour sérigraphie, une feuille de matière plastique ou de
de verre dont une face est recouverte d'une couche mince d'un oxyde semi-conducteur transparent.

On peut utiliser par exemple comme matériau de contre-électrode des feuilles métalliques minces, des feuilles souples de graphite pur (feuilles flexibles de graphite "Grafoil" de Union Carbide ou "Papyex" de Carbone-Lorraine, etc...), des tissus ou toiles de graphite ou de carbone (feutres de carbone "RVC" et de graphite "RVG", tissus de carbone "RCM" et de graphite "TGM" de Carbone-Lorraine, etc...), cette liste n'étant pas limitative et seulement indicative.

On peut aussi utiliser des matériaux conducteurs composites tels que des feuilles de matières plastiques ou d'élastomères (chlorure de polyvinyle, polyoléfines, silicones, etc...) chargées avec des particules, fibres ou paillettes de substances ayant une conductivité électronique, par exemple, des métaux: cuivre, argent, nickel, notamment (telles que les feuilles "Conmax" de Tecknit chargé avec du nickel, notamment), des semi-conducteurs: oxyde d'étain, oxyde d'indium, notamment, du graphite ou du carbone (telles que les feuilles "Condulon" de Pervel Industries, "Cabelec" de Cabot, "Abbey 100" de Abbey Plastics Corporation, Polyisobutylène chargé de graphite de Niklaus Branz, notamment). Cette liste étant également non limitative et purement indicative.

On peut encore utiliser comme matériau de contre-électrode une composition conductrice originellement fluide, composée généralement d'une résine et d'une charge conductrice électronique particulaire et éventuellement d'un solvant, déposée sur un substrat puis séchée ou polymérisée, par exemple une encre ou pâte conductrice sérigraphiable (telle que "Electrodag 423 SS" à base de graphite d'Acheson, "ACP-020J" à base de cuivre et "TU-40S" à base de graphite de Asahi Chemical, etc...), ou encore par exemple, un vernis conducteur ou peinture conductrice (tel que "Copalex 100" à base de cuivre de Showa Denko, "Electrodag 440AS" à base de nickel et "Electrodag 5513" à base de graphite de Acheson, "Acrylic-1" à base d'argent et "Latex 1000" à base de carbone de Tecknit, "Electrodag 5406" d'Acheson, etc...), déposé en couche de faible épaisseur par les techniques connues de sérigraphie, de projection au pistolet, d'enduction par lame d'air ou barreau à fil hélicoïdal, de trempé, etc... (On entend par techniques dites de "films épais" l'ensemble de ces techniques et des techniques diverses de formation d'un film ou couche solide dans des épaisseurs de l'ordre de celles définies précédemment comme étant de "faible épaisseur" à partir d'un matériau fluide). On peut dans ce cas utiliser comme substrat un des matériaux conducteurs en forme de feuille cités précédemment, et constituer ainsi des contre-électrodes de structure composite fournies par l'association, par exemple, en couches superposées, de plusieurs matériaux de contre-électrodes différents, association susceptible de combiner éventuellement de manière avantageuse leurs caractéristiques. On peut aussi dans ce cas utiliser un substrat isolant électriquement, imperméable ou encore poreux ou encore perforé par exemple, une feuille mince de matière plastique isolante électriquement imperméable ou perforée ou une feuille d'un non-tissé en fibres synthétiques. Cette disposition peut avantageusement être mise en oeuvre dans un dispositif d'affichage comportant une multiplicité de points-image et/ou segments d'image. Elle permet sur un substrat dorsal isolant unique, de préférence en forme de feuille mince souple, de réaliser de façon simple et économique l'ensemble de la configuration des contre-électrodes à l'aide des techniques de films épais mentionnées plus haut. Ce substrat dorsal isolant unique peut être permanent, c'est-à-dire constituer un composant définitif du dispositif d'affichage. Il peut aussi, par un choix approprié comme substrat d'une feuille de matière plastique non adhésive et/ou d'une feuille recouverte d'une couche de substance anti-adhérente, n'être présent qu'à titre temporaire, pour être retiré une fois le dispositif terminé. Dans ce cas, il ne constitue qu'un moyen intermédiaire commode de fabrication permettant une réalisation avantageuse de la configuration de contre-électrodes.

On peut également, dans un autre mode de réalisation d'une contre-électrode d'un dispositif, déposer une composition conductrice originellement fluide à l'aide des techniques de films épais directement sur la couche de matériau amélioré, elle-même éventuellement déjà préalablement appliquée sur l'électrode de travail. Dans un dispositif d'affichage comportant une multiplicité de points-image et/ou segments d'image, on peut ainsi directement appliquer, à l'aide des techniques de films épais et en utilisant des écrans, stencils et/ou masques appropriés, une configuration voulue de portions de couche formant des contre-électrodes sur une configuration conjuguée de portions de couche de matériau amélioré, elle-même déjà appliquée sur une autre configuration conjuguée d'électrodes de travail déposées sur un substrat transparent pouvant constituer un support mécanique de l'ensemble du dispositif d'affichage et susceptible même de constituer l'unique support mécanique du dispositif. Les portions de couche précédentes ou couches d'aires réduites formant contre-électrode, sont des portions de couche indépendantes entre elles qui peuvent être, selon le cas, propres chacune à une cellule élémentaire ou commune chacune à un groupe restreint particulier de cellules élémentaires, par exemple commune aux cellules d'une même ligne ou d'une même colonne.

La couche de matériau électrolytique peut être mise en oeuvre dans le dispositif de modulation de la lumière par application ou formation d'une couche au contact d'une des deux électrodes selon l'un des procédés décrits, suivie de l'application de l'autre électrode au contact de la face libre de la couche du matériau. Ainsi qu'on l'a déjà indiqué, avec le mode préféré de réalisation du matériau électrolytique qui lui procure un toucher collant ou collant de contact ou superficiel, il n'est pas indispensable de prévoir des moyens mécaniques spécifiques pour maintenir la cohésion de la cellule élémentaire ainsi constituée, ni pour assurer et conserver un excellent contact physique et électrique à chaque interface électrode-couche de matériau électrolytique, l'adhérence de la couche de matériau électrolytique à chaque électrode étant suffisante à cet effet. Avec de mode de réalisation du matériau électrolytique, celui-ci peut être également mis en oeuvre par application ou formation d'une première couche au contact de l'une des deux électrodes et d'une seconde couche au contact de l'autre électrode, suivie de la réunion des deux couches en une couche composite unique par mise en contact et adhésion des deux couches par leur face libre.

Dans un dispositif d'affichage comportant une multiplicité de points-image et/ou segments d'image, la couche de matériau électrolytique peut être commune à toutes les cellules élémentaires d'affichage et occuper la totalité de la surface d'écran. Elle peut être aussi distribuée selon une configuration superficielle, c'est-à-dire fractionnée en portions de couche ou couches d'aires réduites indépendantes et réparties sur l'écran, propres chacune à une cellule élémentaire ou communes chacune seulement à un nombre restreint de cellules élémentaires (par exemple commune aux cellules d'une même ligne ou d'une même colonne dans un dispositif d'affichage matriciel). L'obtention de telles configurations superficielles est particulièrement aisée avec le matériau électrolytique décrit grâce aux techniques de masques, stencils, écrans, etc... utilisées dans les procédés de dépôt dits de "films épais".

Les moyens de connexion électrique internes au dispositif autonome peuvent être pris parmi tous les conducteurs et procédés de liaison ou connexion électrique utilisables.

On entend par matériau de connexion électrique un matériau homogène ou composite, à partir duquel il est possible de constituer une ou plusieurs configurations superficielles de connexions électriques reliant les cellules élémentaires aux connecteur(s) ou zone(s) de connexion au(x)quel(s) doivent être reliés les alimentations et circuits électroniques de commande et d'adressage. Un tel matériau peut être par exemple une pâte à l'argent ou au cuivre pour sérigraphie, une laque conductrice, un ruban de cuivre autocollant, un conducteur de circuit imprimé, notamment, la liste n'étant pas limitative et seulement indicative.

On peut notamment utiliser avantageusement les encres, pâtes ou laques conductrices, en particulier à base d'argent particulaire (telles que par exemple "Electrodag 1415" et "Electrodag 427 SS" de Acheson, "CON/RTV-I" de Technit, "LS-408" de Asahi Chemical, "L 2003" et "L 2030" de Demetron, etc...), lesquelles, mises en oeuvre par les techniques de film épais, permettent commodément d'établir un contact électrique de très bonne qualité aussi bien avec l'électrode de travail qu'avec la contre-électrode et d'établir une liaison ("bond") ou "soudure" électrique -c'est-à-dire un moyen d'amenée du courant électrique- entre l'une ou l'autre électrode et un conducteur de connexion interne tel qu'un film métallique ou un ruban de cuivre ou un élément de circuit imprimé ou une encre ou pâte conductrice. Cette dernière permet plus spécifiquement de constituer un conducteur de connexion pouvant être conformé à un relief et à un parcours quelconques tels que ceux imposés par la surface dorsale d'un dispositif d'affichage comportant une multiplicité de points-image et/ou segments d'image sur laquelle il est avantageux de l'appliquer, et pouvant au surplus par un choix approprié de l'encre être déformable sans rupture; de tels conducteurs de connexion permettent de relier de manière très pratique chaque électrode à un conducteur métallique ou à un ensemble rigide de conducteurs métalliques tel qu'un circuit imprimé écarté des électrodes à connecter ou encore de relier chaque électrode à un connecteur ou zone de connexion du dispositif par exemple, à un bord, à partir duquel il peut être plus commode de relier électriquement le dispositif à l'électronique d'adressage et de commande.

Les moyens de masquage de la périphérie du point-image ou du segment d'image, c'est-à-dire, dans le cas d'un dispositif d'affichage comportant une multiplicité de points-image et/ou segments d'image, de l'espace interstitiel remplissant toute la surface d'écran à l'exception des points-image et/ou segments d'image eux-mêmes, peuvent être nécessaires pour dissimuler les conducteurs de connexion interne et tous autres éléments de la structure du dispositif d'affichage qui pourraient être visibles. Ils peuvent être également nécessaires, en tant que moyens simultanés de contraste, pour contribuer au contraste des points-image et/ou segments d'image écrits par rapport à la partie restante de l'écran, partie restante qui comprend les points-image et/ou segments d'image non écrits et cet espace interstitiel.

Dans le cas, par exemple, d'un dispositif d'affichage fonctionnant uniquement par réflexion, le point-image et/ou segment d'image apparaît noir quand il est écrit et par exemple blanc (grâce, par exemple à un pigment contrastant blanc présent dans le matériau électrolytique) quand il est effacé (c'est-à-dire non écrit). Il est alors souhaitable, dans un premier mode d'affichage -qu'on peut qualifier sommairement d'affichage d'images noires sur fond blanc- que les moyens de masquage de la périphérie du point-image ou segment d'image présentent un aspect blanc aussi proche que possible du blanc des points-image et/ou segments d'image non écrits, ce qui contribue à faire ressortir le noir des points-image et/ou segments d'image écrits par rapport à leur environnement constitué par l'ensemble des points-image et/ou segments d'image non écrits et par l'espace périphérique interstitiel et maximise le contraste. Dans un second mode d'affichage qu'on peut qualifier sommairement d'affichage d'images blanches sur fond noir -il est à l'opposé souhaitable que les moyens de masquage de la périphérie présentent un aspect noir aussi proche que possible du noir des points-image et/ou segments d'image écrits, contribuant à faire ressortir le blanc des points-image et/ou segments d'image non écrits par rapport à leur environnement constitué par l'ensemble des points-image et/ou segments d'image écrits et par l'espace périphérique interstitiel, maximisant là encore le contraste. Dans le cas d'un dispositif d'affichage fonctionnant par transmission, c'est-à-dire éclairé par l'arrière, il est en général préférable de minimiser la réflexion de la lumière ambiante par la périphérie du point-image ou segment d'image qui dégrade le contraste, et par conséquent, de donner à cette périphérie un aspect noir ou tout au moins sombre et aussi peu réfléchissant que possible.

Dans le cas d'un dispositif d'affichage selon l'invention fonctionnant par réflexion, les moyens de masquage et de contraste de la périphérie du point-image et/ou segment d'image sont déjà intrinsèquement créés lorsqu'on donne à la couche de matériau électrolytique l'étendue de la totalité de la surface d'écran: le pigment masquant et constrastant présent dans la couche de matériau électrolytique exerce son action sur la totalité de la surface d'écran.

Si l'on ne souhaite pas ou si l'on ne peut pas, pour un dispositif fonctionnant par réflexion, donner à la couche de matériau électrolytique une étendue couvrant la totalité de la surface d'écran, par exemple à la suite du choix d'une méthode de fabrication du dispositif qui ne le permet pas, ou encore si le dispositif est destiné à fonctionner par transmission et donc utilise un matériau électrolytique transparent, il convient de mettre en oeuvre des moyens spécifiques de masquage et de contraste de la périphérie du point-image ou segment d'image. De tels moyens peuvent comprendre par exemple l'application, sur cette périphérie, avant la mise en place des moyens de connexion et de tous les composants, qu'il s'agit de masques, d'une couche d'un matériau masquant et contrastant telle qu'une couche d'une peinture, d'une encre, d'un vernis ou d'un polymère ou élastomère contenant des pigments et/ou des colorants en quantité telle qu'une couche d'épaisseur suffisante constitue un masque opaque présentant la couleur voulue. De très nombreux matériaux de ces catégories peuvent convenir, notamment ceux susceptibles de sécher ou durcir ou réticuler à température ordinaire ou peu élevée, par exemple, des peintures, laques et vernis cellulosiques, vinyliques, acryliques, notamment des encres et pâtes colorées pour sérigraphie, des élastomères silicones pigmentés monocomposants réticulants à température ambiante (tels que les "Rhodorsil CAF" de Rhône-Poulenc, notamment), des mélanges pigmentés bi-composants résine-durcisseur ou résine catalyseur (époxy, silicones, notamment), polymérisants ou vulcanisants à température ambiante ou voisine, notamment. De tels matériaux sont commercialement disponibles sous forme de suspensions et/ou solutions dans un solvant adéquat ou encore sous forme monomère fluide non réticulée en un seul composant ou en deux composants à mélanger peu avant l'emploi. Ils peuvent être appliqués en couche régulière sur le verso du dispositif, à travers une configuration convenable de masques, écrans, stencils, etc... destinés à ménager les zones qui ne doivent pas être recouvertes (par exemple les points, lignes ou zones des électrodes de travail et des contre-électrodes où doivent être pris les contacts électriques au cas où les connexions électriques sont établies après masquage) ou qui ne doivent pas être masquées (par exemple les contre-électrodes transparentes sur la portion de leur surface correspondant au point-image ou segment d'image dans le cas d'un dispositif fonctionnant par transmission), notamment à l'aide de toutes les techniques d'application appropriées telles que celles connues en soi: projection au pistolet, sérigraphie, trempé, enduction au rouleau, techniques d'imprimerie, notamment).

Des moyens d'isolation et de protection des composants du dispositif vis-à-vis de l'ambiance extérieure sont généralement souhaitables ou même nécessaires pour empêcher l'accès à ces composants de contaminants et/ou agents de corrosion présents dans l'ambiance atmosphérique extérieure, et éventuellement les protéger de la pluie, du brouillard et de projections accidentelles diverses et possiblement des chocs. Dans des cas extrêmes, on peut être amené à donner, à ces moyens d'isolation et de protection, une qualité d'étanchéité rigoureuse aux liquides, aux gaz, à tout autre corps dont on ne souhaite pas la pénétration ou la sortie du dispositif. De tels moyens d'isolation ou de protection peuvent par exemple comprendre une couche additionnelle de peinture, vernis, résine, notamment telle que décrite précédemment comme moyen de masquage et de contraste, appliquée à l'aide des techniques précitées sur l'ensemble de la face arrière du dispositif si une telle couche présente une imperméabilité suffisante aux liquides et aux gaz. De tels moyens peuvent, plus généralement, comprendre le revêtement, l'enrobage ou l'imprégnation du dispositif à protéger et, notamment, de sa face arrière par un polymère ou un élastomère disponible sous forme d'un monomère fluide additionné d'un durcisseur ou d'un catalyseur de réticulation, d'une suspension ou d'une solution de résine dans un liquide ou un solvant adéquat, pouvant (non nécessairement) comporter une charge. On peut en particulier avantageusement recouvrir, noyer ou imprégner l'arrière du dispositif à partir de ses bords dans une résine d'enrobage ou de scellement du type de celles utilisées pour enrober des circuits imprimés, par exemple des résines adhérentes et de préférence souples une fois réticulées, telles que des élastomères silicones (par exemple les "RTV" de General Electric, etc...). Un tel polymère est préférentiellement incolore et transparent si le dispositif est destiné à fonctionner par transmission (par exemple le caoutchouc silicone "RTV 615" de General Electric). Une telle résine transparente et possédant de bonnes propriétés optiques peut d'ailleurs servir à enrober totalement un tel dispositif, qu'il fonctionne par transmission ou par réflexion, lui conférant une protection maximale.

Bien que des moyens spécifiques de cohésion des cellules ne soient pas indispensables dans le cas où cette cohésion est assurée par les propriétés de collant de contact du matériau électrolytique, les moyens de masquage et les moyens d'isolation et de protection précédents peuvent contribuer à cette cohésion.

Un point-image ou segment d'image est déterminé en forme, taille et position par l'intersection des projections orthogonales, sur la surface d'écran, d'aires données à la première électrode, à la contre-électrode et à la couche de matériau électrolytique de chaque cellule élémentaire d'affichage.

La possibilité de définir un point-image ou segment d'image simplement par une telle intersection résulte de la mise en évidence faite précédemment de ce que dans le procédé de modulation de la lumière décrit, et avec des composants ayant les épaisseurs indiquées, le point-image ou segment d'image est la surface correspondant à une telle intersection, délimitée par un contour remarquablement net bien que cette surface se forme à une distance de la contre-électrode égale à l'épaisseur de la couche de matériau électrolytique, alors qu'on aurait pu s'attendre à un contour flou ou diffus, au moins pour la portion de contour déterminée par la contre-électrode, et de ce que l'accroissement de densité optique, une fois formé, ne diffuse ni ne se dilue dans la périphérie du point-image ou segment d'image.

Cette possibilité est mise à profit pour la construction, avec une très grande économie de moyens de dispositifs d'affichage selon un mode possible de réalisation comportant une multiplicité de points-image et/ou segments d'image, et, notamment, des dispositifs à matrices de points-image ou matriciels présentant une très haute résolution. (Ce mode de réalisation est désigné, par la suite, sous l'appellation "panneau matriciel").

Selon ce mode de réalisation, chacune des cellules élémentaires d'affichage se présente principalement comme la superposition de trois couches ou pellicules (électrode, couche de matériau électrolytique, contre-électrode), chacun de ces trois composants principaux pouvant servir à définir une portion ou la totalité du contour de chaque point-image ou segment d'image sans qu'il soit nécessaire de faire appel à d'autres moyens et/ou à d'autres composants. Chaque composant d'une telle cellule élémentaire ne fonctionne ou n'opère qu'à l'intérieur du contour du point-image ou segment d'image. Toute extension de ce composant au-delà de ce contour peut, le cas échéant, servir à une autre cellule élémentaire adjacente sans qu'il soit nécessaire de prévoir un intervalle substantiel entre les deux zones du composant autre que celui correspondant à la géométrie relative de ces deux points-image adjacents. Il n'est pas indispensable de limiter la dimension minimale du point-image ou segment d'image pour tenir compte d'un contour diffus ou flou et ménager l'existence d'une zone suffisante de densité optique maximale. Chaque point-image ou segment d'image peut être aussi petit que le permettent les techniques d'application ou de configuration ("patterning") des pellicules ou couches constituant les composants. Il n'est pas indispensable de prévoir une séparation ou intervalle minimal substantiel entre points-image ou segments d'image adjacents pour éviter une interpénétration de ces points-image ou segments d'image due à un contour diffus ou flou qui aurait pour effet de réduire la résolution et le contraste. Il n'est pas non plus indispensable de prévoir une séparation ou intervalle minimal substantiel entre points-image ou segments d'image adjacents pour éviter une interpénétration de ces points-image ou segments d'image qui serait due à la diffusion ou à la dilution de la densification optique d'un point-image ou segment d'image dans sa périphérie, c'est-à-dire dans les points-image ou segments d'image adjacents. Enfin, il n'est pas non plus indispensable de prévoir, pour maintenir la densification optique d'un point-image ou segment d'image dans son contour, des moyens particuliers additionnels de confinement du point-image ou segment d'image dans un contour déterminé qui accroitraient la surface occupée par la cellule individuelle et par conséquent accroîtraient l'intervalle entre points-image ou segments d'image adjacents et, en outre, accroîtraient la complexité et le coût du dispositif d'affichage.

Sur la surface d'écran d'un dispositif d'affichage comprenant une multiplicité de points-image et/ou segments d'image, on entend par "configuration superficielle", des points-image et/ou des segments d'image, la configuration géométrique superficielle des points-image et/ou segments d'image individuellement adressables, voulue telle que la densification optique, c'est-à-dire le noircissement ou l'opacification de combinaisons sélectives de ces points-image et/ou segments d'image puisse représenter les caractères alphanumériques, images et autres arrangements graphiques qu'on se propose d'afficher.

A une configuration superficielle des points-image et/ou des segments d'image d'un dispositif d'affichage correspond une distribution spatiale, dans le dispositif de cellules élémentaires d'affichage dont les composants sont, dans les dispositifs d'affichage décrits, des couches ou pellicules superposées de forme et d'aire définies dont la projection orthogonale sur la surface d'écran est telle qu'elle inclut au moins le point-image ou segment d'image. Chaque cellule élémentaire peut comporter ses propres composants individualisés. Mais, il est possible que des composants homologues d'un type donné soient des zones distinctes d'un composant unique commun à une partie ou à la totalité des cellules élémentaires. C'est ainsi que dans un dispositif d'affichage de type matriciel, les électrodes transparentes d'une même colonne de points-image peuvent faire partie d'une unique électrode conductrice transparente en forme de bande, commune à toutes les cellules élémentaires de la colonne.

Sur un écran de dispositif d'affichage comprenant une multiplicité de points-image et/ou segments d'image, on entend par configuration superficielle de composants de même type la configuration géométrique formée par l'ensemble des composants des cellules élémentaires d'affichage appartenant à ce même type de composant, de tels composants pouvant être chacun propre à une cellule ou commun à un groupe de cellules.

On entend par intersection de plusieurs configurations superficielles superposées la configuration géométrique formée par les aires communes aux projections orthogonales sur la surface d'écran des diverses configurations superficielles considérées.

Par commodité de langage, on convient que l'expression "commun à un groupe de cellules ou dispositifs élémentaires et appliquée au terme électrode de travail ou contre-électrode ou couche de matériau (ou portions de chacune d'elles) s'applique lorsque les électrodes de travail, les contre-électrodes, les couches de matériau, respectivement, du groupe de cellules ou dispositifs considérés sont des zones distinctes entre elles du composant qualifié de commun à ce groupe.

On entend par "configurations superficielles conjuguées" de composants d'un dispositif d'affichage des configurations superficielles superposées de composants de chaque type telles que l'association des composants détermine autant de cellules élémentaires d'affichage complètes que le dispositif d'affichage doit comporter de points-image et/ou de segments d'image, et telles que la distribution spatiale et la taille de ces cellules élémentaires soient compatibles avec les localisations et les dimensions voulues des points-image et/ou segments d'image sur l'écran du dispositif.

Pour construire, selon ce mode de réalisation, un dispositif d'affichage comportant une multiplicité de points-image et/ou segments d'image, on associe en les superposant, sans mettre en oeuvre d'autres moyens pour aider à la délimitation ou à la séparation des points-images et/ou segments d'image, trois configurations superficielles de composants (c'est-à-dire une configuration superficielle d'électrodes de travail transparentes, une configuration superficielle de portions de couche de matériau électrolytique et une configuration superficielle de contre-électrodes, dans cet ordre) configurées et conjuguées de telle façon que leur intersection définisse la configuration superficielle voulue de points-image et/ou de segments d'image individuellement adressables.

Par convention, on réserve dans la suite de la description l'expression "configuration" à tous les cas possibles à l'exception de ceux où le composant concerné est unique et commun à toutes les cellules élémentaires du dispositif, auxquels cas on utilise l'expression qualificative "unique commun à tout l'écran", appliquée au composant considéré.

Selon ce mode de réalisation d'un dispositif d'affichage comportant une multiplicité de points-image et/ou de segments d'image, on dispose de possibilités multiples de structure et de construction. Chaque composant de type différent peut servir à définir une portion ou la totalité du contour d'un point-image ou segment d'image comme on l'a décrit précédemment. On peut choisir, pour un dispositif d'affichage donné, la combinaison la plus avantageuse de configurations du point de vue de la simplicité de fabrication des cellules élémentaires et des connexions électriques internes au dispositif. Selon les types de composants qu'on choisit de distribuer sur l'écran, selon une configuration superficielle et ceux qu'on choisit de maintenir comme composant unique commun à toutes les cellules élémentaires de l'écran, on dispose notamment des combinaisons suivantes:

Première variante:

Electrodes de travail seules distribuées selon une configuration superficielle, contre-électrode et couche de matériau électrolytique unique commune à tout l'écran: disposition utilisable notamment pour des dispositifs à adressage direct.

Deuxième variante:

Contre-électrodes seules distribuées selon une configuration superficielle, électrode de travail et couche de matériau électrolytique unique commune à tout l'écran: disposition utilisable notamment pour des dispositifs à adressage direct.

Troisième variante:

Electrodes de travail et portions de couche de matériau électrolytique distribuées selon des configurations superficielles conjuguées, contre-électrode unique commune à tout l'écran: disposition utilisable notamment pour des dispositifs à adressage direct.

Quatrième variante:

Contre-électrodes et portions de couche de matériau électrolytique distribuées selon des configurations superficielles conjuguées, électrode de travail unique commune à tout l'écran: disposition utilisable notamment pour des dispositifs à adressage direct.

Cinquième variante:

Electrodes de travail et contre-électrodes distribuées selon des configurations superficielles conjuguées, couche de matériau électrolytique unique commune à tout l'écran: disposition utilisable notamment pour des dispositifs à adressage direct ou pour des dispositifs à adressage matriciel.

Sixième variante:

Electrode de travail, contre-électrodes et portions de couche de matériau électrolytique distribuées selon trois configurations superficielles conjuguées: disposition utilisable notamment pour des dispositifs à adressage direct ou pour des dispositifs à adressage matriciel.

En outre, dans les quatre dernières variantes, les configurations superficielles de deux types de composants peuvent avantageusement être identiques ou sensiblement identiques, c'est-à-dire confondues ou sensiblement confondues, dans de nombreux cas où cette confusion est susceptible de constituer un avantage, par exemple du point de vue de la fabrication. On peut ainsi considérer les possibilités suivantes:

Sous-variante de la troisième variante:

Configurations confondues des électrodes de travail et des portions de couche de matériau électrolytique, contre-électrode unique commune à tout l'écran.

Sous-variante de la quatrième variante:

Configurations confondues des contre-électrodes et des portions de couche de matériau électrolytique, électrode de travail unique commune à tout l'écran.

Sous-variante de la cinquième variante:

Configurations confondues des électrodes de travail et des contre-électrodes, couche de matériau électrolytique commune à tout l'écran.

Première sous-variante de la sixième variante:

Configurations confondues des contre-électrodes et des portions de couche de matériau électrolytique, configuration différente conjuguée des électrodes de travail.

Deuxième sous-variante de la sixième variante:

Configurations confondues des électrodes de travail et des couches de matériau électrolytique, configuration différente conjuguée des contre-électrodes.

Troisième sous-variante de la sixième variante:

Configurations confondues des électrodes de travail et des contre-électrodes, configuration différente conjuguée des portions de couche de matériau électrolytique.

Quatrième sous-variante de la sixième variante:

Configurations confondues des trois types de composants.

Toutes ces variantes de combinaisons particulières de structures sont réalisables par le premier procédé de fabrication décrit ultérieurement. Les sous-variantes de la quatrième variante et les première et quatrième sous-variantes de la sixième variante sont en outre réalisables par le deuxième procédé de fabrication également décrit.

On entend par "configuration associée" d'un matériau, composant ou constituant, une configuration géométrique appropriée et convenablement associée, reliée ou combinée aux composants des cellules élémentaires d'un dispositif de modulation de la lumière comportant une pluralité de ces cellules, d'un matériau, composant ou constituant périphérique, extrinsèque ou spécifique nécessaire au fonctionnement des cellules élémentaires et/ou permettant d'utiliser le dispositif comme une unité autonome.

Un premier procédé possible de fabrication d'un dispositif de modulation de la lumière comportant une multiplicité de points-image et/ou de segments d'image, notamment applicable à la structure préférée, qui se prête à une fabrication industrielle à bas prix de revient, comporte l'application, à l'aide des techniques connues en soi et dites de "films épais" telles qu'en particulier les techniques de sérigraphie, d'une couche de matériau électrolytique et d'une couche de matériau de contre-électrode, chacune fractionnée en portions de couche définies et distribuées selon des configurations superficielles conjuguées à une configuration superficielle d'électrodes transparentes, de manière en particulier que l'intersection des aires définie par les trois configurations détermine la configuration superficielle voulue de points-image et/ou de segments d'image. Il comporte également, l'application éventuelle, à l'aide des mêmes techniques de films épais, de configurations associées de matériaux de connexion et/ou de matériaux isolants susceptibles d'être mis en oeuvre par les techniques précitées et formant le réseau de connexions électriques internes du dispositif ou une partie au moins de celui-ci. Il comporte également, l'application éventuelle, à l'aide des mêmes techniques de films épais, de configurations associées de matériau masquant et contrastant, de matériau d'isolation, protection, imprégnation ou enrobage, ainsi que de tout autre matériau entrant dans la constitution d'un dispositif de modulation de la lumière et susceptible d'être mis en oeuvre par ces techniques.

L'emploi de couches de matériau électrolytique mises en oeuvre par les techniques de film épais telles qu'en particulier les techniques de sérigraphie, combiné à l'emploi d'encres, pâtes, laques, vernis, résines, notamment, conductrices, isolantes, pigmentées, notamment, mises en oeuvre par les mêmes techniques pour réaliser les contre-électrodes, amenées de courant, connexions électriques, masques contrastants, enductions, enrobages ou imprégnations de protection, isolation, permet la mise en oeuvre du premier procédé de fabrication de dispositifs d'affichage comportant une multiplicité de points-image et/ou segments d'image. Selon ce procédé, on forme, sur des supports ou substrats convenables, à l'aide des techniques de films épais et en utilisant des écrans, stencils, et/ou masques appropriés, des configurations superficielles conjuguées et des configurations associées des divers composants, matériaux et constituants susmentionnés, et, par ces moyens, on fabrique une partie au moins du dispositif autonome comprenant au moins la totalité des cellules élémentaires de modulation de la lumière et éventuellement une partie au moins des composants et constituants périphériques et extrinsèques des cellules et des composants et constituants spécifiques du dispositif autonome.

Selon une première variante de ce premier procédé de fabrication, on réalise une partie au moins du dispositif d'affichage en appliquant en superposition à l'aide des techniques de films épais sur un substrat transparent formant support mécanique et comportant une configuration superficielle d'électrodes de travail transparentes au moins: une configuration conjuguée de portions de couche de matériau électrolytique; une configuration conjuguée aux précédentes de portions de couche de matériau de contre-électrode, ces trois configurations étant en particulier telles que leur intersection détermine la configuration voulue de points-image et/ou segments d'image; et, éventuellement: une configuration associée de matériau de contraste ou masquage périphérique; des configurations associées d'amenées de courant, de conducteurs de connexion et de couches d'isolation constituant une partie au moins du réseau des connexions internes au dispositif reliant les électrodes de travail et les contre-électrodes des cellules élémentaires à une zone de connexion ou à un connecteur, ces configurations étant combinées de telle façon que les différents conducteurs soient isolés les uns des autres ainsi que des électrodes de travail et des contre-électrodes qu'ils n'ont pas à raccorder; des configurations associées de couches ou applications de matériaux de protection, isolation, imprégnation ou enrobage, l'ordre des applications pouvant être différent de l'ordre décrit ci-dessus.

Selon une seconde variante de ce premier procédé de fabrication d'un dispositif de modulation de lumière de faible épaisseur, on réalise au moins une partie du dispositif d'affichage en appliquant en superposition, sur un premier substrat, à l'aide des techniques de films épais telles qu'en particulier les techniques de sérigraphie, au moins une couche de matériau de contre-électrode et une couche de matériau électrolytique, chacune fractionnée en portions ou zones définies et distribuées selon des configurations superficielles conjuguées, et éventuellement des configurations associées d'amenées de courant, de conducteurs de connexion et de couches d'isolation constituant une partie au moins du réseau des connexions internes au dispositif, des configurations associées de matériau masquant et constrastant, de matériaux d'isolation, imprégnation, protection ou enrobage, ainsi que de tout autre matériau susceptible d'entrer dans la constitution d'un dispositif de modulation de la lumière et susceptible d'être mis en oeuvre par les techniques précitées, et en appliquant d'un seul mouvement ou progressivement par zones suivant les cas, ce premier substrat au moins déjà revêtu d'une partie de ses couches sur un second substrat transparent et de préférence rigide ou substantiellement rigide muni d'une configuration superficielle d'électrodes transparentes, conjuguée aux deux précédentes configurations conjuguées, ces trois configurations étant en particulier telles que leur intersection détermine la configuration voulue de points-image et/ou segments d'image, application faite de façon à permettre de maintenir par pression ou par adhésion par collant de contact au moins l'ensemble des couches du premier substrat au contact du second substrat.

Selon cette seconde variante, on réalise au moins une partie du dispositif d'affichage en appliquant sur un premier substrat à l'aide des techniques de films épais, au moins: une configuration de portions de couche de matériau électrolytique; une configuration conjuguée à la précédente de portions de couche de matériau de contre-électrode, les trois configurations étant en particulier telles que leur intersection détermine la configuration voulue de points-image et/ou segments d'image; et, éventuellement: une configuration associée de matériau de contraste ou masquage périphérique; des configurations associées d'amenées de courant, de conducteurs de connexion et de couches d'isolation constituant une partie au moins du réseau des connexions internes au dispositif reliant les électrodes de travail et les contre-électrodes des cellules élémentaires à une zone de connexion ou un connecteur, ces configurations étant combinées de telle façon que les différents conducteurs soient isolés les uns des autres ainsi que des électrodes de travail et des contre-électrodes qu'ils n'ont pas à raccorder; des configurations associées de couches ou applications de matériaux de protection, isolation, imprégnation ou enrobage, l'ordre des applications pouvant être différent de l'ordre décrit ci-dessus, et en appliquant le premier substrat revêtu au moins d'une partie des diverses configurations ci-dessus décrites sur un second substrat transparent formant support mécanique et comportant une configuration superficielle d'électrodes de travail transparentes conjuguée à celles des couches de matériau électrolytique et des contre-électrodes, ces trois configurations étant en particulier telles que leur intersection détermine la configuration voulue de points-image et/ou segments d'image, l'application du premier substrat sur le second étant faite de manière à permettre de maintenir au contact du second substrat, par pression ou par collant de contact, l'ensemble formé par les configurations appliquées sur le premier substrat.

On peut, dans une première sous-variante de cette seconde variante du premier procédé dans laquelle le premier substrat est préférentiellement choisi dans un matériau ayant des propriétés anti-adhérentes ou revêtu d'un revêtement anti-adhérent, réaliser le transfert sur le second substrat des configurations enduites ou appliquées sur le premier substrat et le faire suivre du retrait de celui-ci. Un tel premier substrat approprié peut par exemple être une feuille mince souple ayant un état de surface anti-adhérent qu'on peut, une fois enduite, c'est-à-dire revêtue de ses configurations, appliquer complètement sur le second substrat d'un seul mouvement ou en la déroulant, puis retirer en la séparant progressivement de l'ensemble formé par les configurations superposées à partir d'un bord ou d'un coin, cet ensemble étant maintenu au contact du second substrat de préférence au moyen de propriétés de collant de contact de sa face concernée, propriétés en particulier résultant du collant de contact du matériau électrolytique dans une composition préférée. Il peut aussi être par exemple un cylindre rigide qui transfère l'ensemble de ses configurations enduites ou appliquées sur le second substrat généralement plan lorsqu'on le fait rouler sur ce dernier.

On peut aussi, dans une deuxième sous-variante dans laquelle le premier substrat est préférentiellement une feuille mince souple isolante ou isolée n'ayant pas d'état de surface anti-adhérent, laisser, une fois ce premier substrat enduit et appliqué sur le second substrat, subsister en place ce premier substrat qui devient alors un composant permanent du dispositif. Un tel premier substrat approprié peut par exemple être une feuille mince souple imperméable de matière plastique.

On peut aussi, dans une troisième sous-variante de la seconde variante du premier procédé de fabrication, dans laquelle le premier substrat est préférentiellement une feuille mince souple n'ayant pas d'état de surface anti-adhérent qui présente une certaine porosité répartie ou localisée selon une distribution discrète, appliquer une partie des enductions au recto, c'est-à-dire sur la face devant s'appliquer sur le second substrat, et une autre partie au verso de ce premier substrat, les éventuelles liaisons électriques nécessaires entre les couches situées de part et d'autre du premier substrat s'effectuant à travers la porosité. Un tel premier substrat approprié peut être, par exemple, une toile ou un non-tissé en fibres synthétiques, une feuille de matière plastique imperméable dans laquelle ont été pratiquées des perforations selon une distribution particulière. Les couches devant être appliquées au verso du premier substrat, ou une partie au moins d'entre elles, peuvent l'être avant ou après l'application de ce premier substrat déjà revêtu des couches du recto sur le second substrat. Dans un autre mode de mise en oeuvre de la présente sous-variante, les couches devant être appliquées au verso du premier substrat, ou une partie au moins d'entre elles peuvent l'être après application de ce premier substrat déjà revêtu des couches du recto sur le second substrat. Ce dernier mode est particulièrement avantageux lorsque le dispositif comporte une multiplicité d'amenées de courant électrique aux électrodes de travail, réparties sur la surface du second substrat: on peut aisément, par application par exemple d'une seule couche convenablement distribuée en portions appropriées formant une configuration associée d'un matériau de connexion électrique, tel qu'une encore ou pâte conductrice ou équivalent sur le verso du premier substrat, à la fois constituer les amenées de courant en contact avec les électrodes de travail à travers la porosité de ce premier substrat et les connecter électriquement au réseau de connexions électriques internes du dispositif de modulation de la lumière.

Selon une troisième variante du premier procédé de fabrication, on combine entre elles les deux premières variantes, c'est-à-dire qu'on applique une partie des couches ou enductions constitutives des diverses configurations concernées selon la première variante et une autre partie selon la seconde variante, le premier substrat de la première variante devant alors être considéré comme confondu avec le second substrat de la seconde variante.

Le premier procédé ainsi décrit met donc en oeuvre les techniques des films épais, techniques qui sont connues en elles-mêmes de l'homme de l'art de ces techniques. Pour cette raison, ces techniques ne sont pas décrites davantage ici, l'invention consistant essentiellement à appliquer ces techniques des films épais aux cellules et dispositifs de modulation.

Un second procédé possible de fabrication d'un dispositif de modulation de la lumière comportant une multiplicité de points-image et/ou segments d'image, notamment applicable à la structure préférée, qui se prête à une fabrication industrielle à bas prix de revient, comporte l'application, sur un unique substrat transparent comportant une configuration superficielle d'électrodes transparentes, d'une configuration superficielle conjuguée de points, segments ou bandes comprenant, associée en une pellicule composite unique au moins une couche de matériau électrolytique selon l'invention et une contre-électrode (par exemple pelliculaire).

Ce second procédé de fabrication d'un dispositif de modulation de la lumière notamment un dispositif d'affichage, comporte la fabrication, selon les techniques connues en soi notamment d'extrusion, laminage, calandrage, enduction, ou équivalent, d'une pellicule, feuille ou bande composite formée au moins d'une couche de matériau électrolytique appliquée sur une contre-électrode en forme de pellicule, feuille, bande ou équivalent préférentiellement souple, et éventuellement d'une couche de matériau de connexion électrique appliquée sur la face extérieure de la pellicule de contre-électrode. Il comporte également la découpe, dans cette pellicule ou feuille composite, à l'aide des techniques connues en soi de poinçonnage, découpe à l'emporte-pièce, découpe au laser, notamment, d'éléments en forme de points, segments ou bandes.

Dans ce second procédé de fabrication, on réalise au moins une partie du dispositif de modulation de la lumière: en constituant une pellicule ou feuille composite unique formée d'au moins une couche de matériau électrolytique selon l'invention et d'une contre-électrode en forme de pellicule ou feuille, de préférence souple, sur laquelle la couche de matériau électrolytique est appliquée, et éventuellement d'une couche de matériau de connexion électrique appliquée sur la face externe de la contre-électrode; en découpant dans cette pellicule ou feuille composite des éléments en forme de points, segments ou bandes; en distribuant ces éléments selon une configuration sur un substrat transparent muni d'une configuration superficielle conjuguée d'électrodes transparentes, ces configurations étant en particulier telles que leur intersection détermine la configuration voulue de points-image et/ou de segments d'image; en fixant ces éléments sur ce substrat par pression ou par collage par contact; et, éventuellement, en appliquant: une configuration associée de matériau de contraste ou masquage périphérique; des configurations associées d'amenées de courant, de conducteurs de connexion et de couches d'isolation constituant une partie au moins du réseau des connexions internes du dispositif reliant les électrodes de travail et des contre-électrodes des cellules élémentaires à une zone de connexion ou à un connecteur, ces configurations étant combinées de telle façon que les conducteurs soient isolés les uns des autres et des électrodes transparentes et des contre-électrodes qu'ils n'ont pas à raccorder; ces configurations associées de couches ou applications de matériaux de protection, isolation, imprégnation ou enrobage, l'ordre de ces applications pouvant être différent de l'ordre ainsi décrit ci-dessus.

Selon ce second procédé, la contre-électrode en forme de feuille ou pellicule ou équivalent mince, peut être une quelconque des contre-électrodes en matériau homogène, en matériau composite, de structure simple ou de structure composite décrite précédemment, préférentiellement souples et déformables sans dommages, d'épaisseur préférentiellement située entre une dizaine de microns et quelques millimètres, plus préférentiellement encore située entre une dizaine et plusieurs centaines de microns. La couche de matériau de connexion électrique éventuellement appliquée sur sa face externe peut, le cas échéant, constituer une amenée de courant électrique de la contre-électrode. La couche de matériau électrolytique présente, préférentiellement, le collant de contact obtenu dans une composition préférée et permet alors d'obtenir la cohésion des cellules élémentaires du dispositif par la simple application sur le substrat des points, segments ou bandes découpés dans la pellicule ou feuille composite.

Le second procédé ainsi décrit met donc en oeuvre les techniques mentionnées d'extrusion, laminage, calandrage, enduction ou équivalent, découpe au laser, poinçonnage, découpe à l'emporte-pièce, techniques qui sont connues en elles-mêmes de l'homme de l'art de ces techniques. Pour cette raison, ces techniques ne sont pas décrites davantage ici, l'invention consistant essentiellement à appliquer ces techniques aux cellules et dispositifs de modulation.

Enfin, le second procédé permet la réalisation de pellicules composites ainsi décrites qui se présente sous la forme d'une pellicule, feuille ou bande comprenant au moins une couche de matériau électrolytique appliquée sur une pellicule, feuille ou bande conductrice électronique et, le cas échéant, une couche de matériau de connexion électrique appliquée sur la face externe de la pellicule, feuille ou bande conductrice électronique.

### EXEMPLE

1. On applique sur une contre-électrode selon l'exemple -8.3.3 de la demande de brevet PCT/US-910 090- une des compositions formatrices fluides suivantes pour la fabrication de la couche pigmentée:

| IRIODINE (Merck) N° | 225 | 235 | 502 | 504 | 205 | 103 | 219 | 215 |
|---|---|---|---|---|---|---|---|---|
| COULEUR | Bleu | Vert | Rouge Brun | Rouge | Jaune Brillant | Sterling Argent | Lilas Perle | Perle Rouge |
| % IRIODINE ≈ | 3,6 | 3,6 | 3,6 | 3,6 | 3,6 | 3,6 | 3,6 | 3,6 |
| % NOIR D'ACETYLENE | 0,03 | 0,03 | 0 | 0 | 0 | 0 | 0,03 | 0,03 |
| % TRITON x 100 | 0,04 | 0,04 | 0,04 | 0,04 | 0,04 | 0,04 | 0,04 | 0,05 |
| % HYDROXYETHYLCELLULOSE "NATROSOL" | 1,5 | 1,5 | 1,5 | 1,5 | 1,5 | 1,5 | 1,5 | 1,5 |
| % LITHIUM BROMURE | 4,8 | 4,8 | 4,8 | 4,8 | 4,8 | 4,8 | 4,8 | 4,8 |
| % BISMUTH (III) CHLORURE | 1,4 | 1,4 | 1,4 | 1,4 | 1,4 | 1,4 | 1,4 | 1,4 |
| % CUIVRE (II) CHLORURE | 0,04 | 0,04 | 0,04 | 0,04 | 0,04 | 0,04 | 0,04 | 0,04 |
| % FER (III) CHLORURE | 0,04 | 0,04 | 0,04 | 0,04 | 0,04 | 0,04 | 0,04 | 0,04 |
| % ACIDE CHLORYDIQUE | 0,7 | 0,7 | 0,7 | 0,7 | 0,7 | 0,7 | 0,7 | 0,7 |
| EAU Q.S.p 100% | - | - | - | - | - | - | - | - |

On applique successivement six couches de 60 microns chacune à la lame d'air (Barre de Baker ou Barre de Conway), qu'on sèche à 65°C.
2. On applique ensuite six couches de 60 microns d'une composition formatrice fluide identique aux précédentes, sauf qu'elle ne contient pas d'Iriodine ni de noir d'acétylène. On sèche à 65°C.
3. On laisse équilibrer en présence d'air atmosphérique à 50% RH et 20°C.
4. On découpe dans la contre-électrode enduite un segment ou point-image de la forme et de la taille voulues et on l'applique sur un substrat recouvert d'une couche transparente de TO ou d'ITO auquel il adhère par son collant de surface.

## Revendications

1. Matériau destiné à des procédés, des cellules, des dispositifs électrochimiques de modulation de la lumière, par réflexion ou transmission, ledit matériau possédant une conductivité ionique et étant tel que, en combinaison:
1) Il est constitué par un mélange homogène, de consistance solide, comportant les constituants suivants:
(a) un sel hydrosoluble de sels d'au moins un métal cathodiquement déposable à partir d'une solution aqueuse d'un de ses ions simples ou complexes;
(b) au moins une résine polymère filmogène primitivement hydrosoluble;
(c) de l'eau;
(d) un couple redox auxiliaire;
2) il est conformable en couche continue d'une épaisseur comprise entre notamment quelques microns et plusieurs dizaines de microns;
le matériau étant capable de, réversiblement (1) développer des dépôts de métal ou d'alliage par réduction cathodique d'au moins un ion métallique déposable présent dans le matériau, et (2) effacer, par oxydation anodique, les dépôts et réincorporer dans l'état d'origine l'ion ou les ions métalliques produits par cette oxydation;
caractérisé en ce qu'il comporte en outre au moins un pigment interférentiel, sous forme dispersée, correspondant à la couleur voulue pour un point-image et/ou segment d'image, en vue d'obtenir des cellules de modulation de la lumière présentant une coloration, notamment en vue de réaliser des dispositifs d'affichage comportant une ou différentes couleurs.

2. Matériau destiné à des procédés, cellules et dispositifs, électrochimiques de modulation de la lumière, par réflexion ou transmission, constitué au moins par un mélange homogène, d'au moins:
(a) un sel ou un mélange de sels d'au moins un métal qui peut être réversiblement déposé cathodiquement et oxydé anodiquement à partir d'une solution aqueuse d'un de ses ions simples ou complexes;
(b) un sel ou un mélange de sels d'au moins un métal ou cation non électrodéposable à partir d'une solution aqueuse;
(c) au moins une résine polymère filmogène primitivement hydrosoluble; et
(d) de l'eau;
ledit matériau possédant une électroconductivité ionique, et en outre comprenant un couple redox auxiliaire réversible;
ledit matériau étant capable, réversiblement:
(a) de développer par réduction cathodique d'au moins un ion métallique électrodéposable présent dans le matériau, un dépôt de métal ou d'alliage métallique;
(b) de dissoudre par oxydation anodique le dépôt de métal ou d'alliage métallique et de réincorporer dans leur état originel l'ion ou les ions métalliques produits par cette oxydation;
(c) de développer par oxydation anodique la forme oxydée du couple redox auxiliaire;
(d) de développer par réduction cathodique la forme réduite du couple redox auxiliaire;
les proportions de sels étant sélectionnées pour que la proportion pondérale du sel ou mélange de sels d'au moins un métal ou cation non électrodéposable soit au moins égale à celle du sel ou mélange de sels d'au moins un métal qui peut être réversiblement déposé cathodiquement et oxydé anodiquement à partir d'une solution aqueuse d'un de ses ions simples ou complexes; et le mélange de sels étant hydrosoluble,
caractérisé en ce qu'il comporte en outre au moins un pigment interférentiel, sous forme dispersée, correspondant à la couleur voulue pour un point-image et/ou segment d'image en vue d'obtenir des cellules de modulation de la lumière présentant une coloration, notamment en vue de réaliser des dispositifs d'affichage comportant une ou différentes couleurs.

3. Matériau selon la revendication 1 ou 2, caractérisé en ce qu'il comporte au moins deux pigments interférentiels différents, mélangés et/ou juxtaposés l'un au-dessus de l'autre et/ou l'un à côté de l'autre correspondants à une ou plusieurs couleurs voulues.

4. Matériau selon l'une quelconque des revendications 1 à 3, caractérisé en ce qu'il comprend en outre un noir sous forme particulaire, notamment de carbone ou équivalent.

5. Matériau selon l'une quelconque des revendications 1 à 4, caractérisé en ce qu'il comprend en outre au moins un pigment non interférentiel et/ou un colorant.

6. Matériau selon l'une quelconque des revendications 1 à 5, caractérisé en ce que les constituants et les compositions sont choisis dans le groupe permettant d'obtenir une consistance solide et une déformabilité plastique ou viscoélastique.

7. Matériau selon la revendication 6, caractérisé en ce que les constituants et la composition sont sélectionnés dans le sous-groupe permettant d'obtenir des propriétés adhésives, notamment un toucher collant ou collant de contact.

8. Procédé de fabrication d'un matériau selon l'une quelconque des revendications 1 à 6, caractérisé en ce qu'il comporte au moins les étapes consistant à:
1) Constituer d'abord au moins une composition formatrice fluide comportant au moins les constituants du matériau et de l'eau en quantité telle que cette composition formatrice fluide ait une viscosité appropriée, notamment pour son application en couche.
2) Agir sur cette composition formatrice fluide en vue de donner au matériau sa consistance solide par évaporation, traitement thermique, réticulation, vulcanisation.

9. Procédé de fabrication d'un matériau selon l'une quelconque des revendications 1 à 5, 7, caractérisé en ce qu'il comporte au moins l'étape consistant à constituer au moins une composition formatrice fluide comportant au moins les constituants du matériau et de l'eau en quantité telle que cette composition formatrice fluide ait une viscosité appropriée à son utilisation sous forme fluide.

10. Procédé de fabrication d'un matériau selon la revendication 8 ou 9, caractérisé en ce qu'il comporte au moins l'étape consistant à disperser le ou les pigments interférentiels dans la composition formatrice fluide constituée.

11. Cellule de modulation de la lumière, caractérisé par le fait qu'elle comporte, au moins, en combinaison:
1) Une première électrode (électrode de travail), transparente ou substantiellement transparente et électroniquement conductrice.
2) Une seconde électrode (contre-électrode), écartée transversalement de l'électrode de travail et électroniquement conductrice.
3) Au moins une couche (ou portion de couche) de matériau selon l'une quelconque des revendications 1 à 7 interposée entre les deux électrodes et en contact avec elles dans la région d'un point-image ou d'un segment d'image.
4) Des zones d'amenée du courant électrique sur l'électrode de travail et sur la contre-électrode, aptes notamment à permettre d'une part d'appliquer à l'électrode de travail une tension électrique négative par rapport à celle de la contre-électrode et, d'autre part, de faire passer entre les électrodes un courant dont le sens est opposé à celui du courant électrique résultant de l'application de la tension précédente,
cette cellule permettant l'écriture d'au moins un point-image ou segment d'image, le maintien dans l'état écrit d'un tel point-image ou segment d'image, réversiblement, l'effacement d'un tel point-image ou segment d'image, et le maintien dans l'état effacé de ce point-image ou segment d'image, l'écriture d'un point-image ou segment d'image étant défini comme l'accroissement de coloration ou de densité optique dans la région de l'interface entre l'électrode de travail et la couche ou portion de couche de matériau et l'effacement d'un point-image ou segment d'image étant défini comme la diminution ou la disparition de l'accroissement de coloration ou de densité optique obtenu lors de l'écriture.

12. Cellule de modulation de la lumière, caractérisée en ce qu'elle comporte, au moins, en combinaison:
1) Une première électrode (électrode de travail), transparente ou substantiellement transparente et électroniquement conductrice.
2) Une seconde électrode (contre-électrode), écartée transversalement de l'électrode de travail et électroniquement conductrice.
3) Au moins une couche (ou portion de couche) de matériau selon l'une quelconque des revendications 1 à 7 au contact de la seconde électrode (contre-électrode).
4) Au moins une couche de matériau, au contact de la première électrode (électrode de travail), comportant, au moins, en combinaison:
(a) un sel hydrosoluble de sels d'au moins un métal cathodiquement déposable à partir d'une solution aqueuse d'un de ses ions simples ou complexes;
(b) au moins une résine polymère filmogène primitivement hydrosoluble;
(c) de l'eau;
(d) un couple redox auxiliaire,
5) Des zones d'amenée du courant électrique sur l'électrode de travail et sur la contre-électrode, aptes notamment à permettre d'une part d'appliquer à l'électrode de travail une tension électrique négative par rapport à celle de la contre-électrode et, d'autre part, de faire passer entre les électrodes un courant dont le sens est opposé à celui du courant électrique résultant de l'application de la tension précédente,
cette cellule permettant l'écriture d'au moins un point-image ou segment d'image, le maintien dans l'état écrit d'un tel point-image ou segment d'image, réversiblement, l'effacement d'un tel point-image ou segment d'image, et le maintien dans l'état effacé de ce point-image ou segment d'image, l'écriture d'un point-image ou segment d'image étant défini comme l'accroissement de coloration ou de densité optique dans la région de l'interface entre l'électrode de travail et la couche ou portion de couche de matériau et l'effacement d'un point-image ou segment d'image étant défini comme la diminution ou la disparition de l'accroissement de coloration ou de densité optique obtenu lors de l'écriture.

13. Cellule de modulation de la lumière, selon la revendication 11 ou 12, caractérisée en ce qu'elle comporte au moins une couche de matériau selon la revendication 3.

14. Dispositif élémentaire de modulation de la lumière, caractérisé par le fait qu'il comporte au moins en combinaison:
A) Une cellule de modulation de la lumière selon l'une quelconque des revendications 11 à 13;
B) Des amenées de courant électrique au contact des zones d'amenée du courant électrique.
C) Des connexions électriques prolongeant les amenées de courant; et
D) Au moins un substrat mécanique, porteur du dispositif.

15. Dispositif autonome de modulation de la lumière, caractérisé en ce qu'il comporte, au moins en combinaison:
1) au moins un et généralement une pluralité de dispositifs élémentaires selon la revendication 14.
2) la prolongation jusqu'à un ou plusieurs connecteurs ou une ou plusieurs zones de connexions électriques des dispositifs élémentaires; et
3) des moyens mécaniques porteurs conférant au dispositif une rigidité structurelle.

16. Dispositif autonome selon la revendication 15, caractérisé en ce que, dans le cas d'une pluralité de dispositifs élémentaires, au moins deux cellules de modulation de la lumière desdits dispositifs comportent des pigments interférentiels identiques ou différents et ont donc une coloration identique ou différente.

17. Procédé de modulation de la lumière, par réflexion ou transmission, caractérisé par le fait qu'il comporte la combinaison de phases suivantes:
1) on réalise un matériau selon l'une quelconque des revendications 1 à 7;
2) on réalise une couche dudit matériau d'une épaisseur comprise entre quelques micromètres et plusieurs dizaines de micromètres;
3) on dispose une première électrode (électrode de travail), transparente ou substantiellement transparente, au contact d'une première face de ladite couche de matériau;
4) on dispose une seconde électrode (contre-électrode) au contact d'une seconde face de ladite couche de matériau et on forme ainsi une cellule élementaire de la lumière;
5) pendant une phase d'écriture, d'une certaine durée, on applique à l'électrode de travail une tension électrique négative par rapport à celle de la contre-électrode, de manière, que pendant cette phase d'écriture, soit écrit au moins un point-image ou un segment d'image, c'est-à-dire obtenu un accroissement de densité optique dans la région de l'interface entre l'électrode de travail et ladite couche de matériau; et
6) pendant une phase d'effacement, ultérieure à une phase d'écriture, on fait passer, entre les électrodes, un courant électrique dont le sens est opposé à celui du courant électrique de la phase d'écriture, de manière que, pendant cette phase d'effacement, le point-image ou le segment d'image précédemment écrit soit effacé, c'est-à-dire que l'accroissement de densité optique précédemment obtenu diminue ou disparaisse;
le procédé permettant réversiblement et répétitivement d'écrire et d'effacer des points-image ou segments d'images.

18. Procédé de fabrication d'un dispositif de modulation de la lumière comportant une multiplicité de points-image et/ou segments d'image, caractérisé en ce qu'il comporte l'application, à l'aide des techniques dites de "films épais" -telles qu'en particulier les techniques de sérigraphie- d'une couche de matériau selon l'une quelconque des revendications 1 à 7, puis d'une couche de matériau de contre-électrode, chacune fractionnée en portions de couche définies et distribuées selon des configurations superficielles conjuguées à une configuration superficielle d'électrodes de travail transparentes.

19. Procédé de fabrication d'un dispositif de modulation de la lumière, caractérisé par le fait qu'on fabrique, selon les techniques connues notamment d'extrusion, laminage, calandrage, enduction, une pellicule, feuille ou bande composite formée au moins d'une couche de matériau selon l'une quelconque des revendications 1 à 7, associée à une contre-électrode, on applique cette pellicule, feuille, bande préférentiellement souple sur un substrat transparent comportant une configuration superficielle d'électrodes transparentes, et on découpe dans cette pellicule ou feuille composite, à l'aide des techniques connues notamment de poinçonnage, découpe à l'emporte-pièce, découpe au laser, d'éléments en forme de points, segments ou bandes.
